(19) Europäisches Patentamt
European Patent Office
Office européen des brevets

(11) EP 4 596 604 A1

(12) **EUROPEAN PATENT APPLICATION**
published in accordance with Art. 153(4) EPC

(43) Date of publication:
**06.08.2025 Bulletin 2025/32**

(21) Application number: **23872026.2**

(22) Date of filing: **19.09.2023**

(51) International Patent Classification (IPC):
***C08G 64/02*** (2006.01) ***C08F 299/02*** (2006.01)
***C08G 64/34*** (2006.01) ***C08J 3/24*** (2006.01)
***C08J 3/28*** (2006.01) ***C08J 7/04*** (2020.01)

(52) Cooperative Patent Classification (CPC):
**C08F 299/02; C08G 64/02; C08G 64/34; C08J 3/24; C08J 3/28; C08J 7/04**

(86) International application number:
**PCT/JP2023/033858**

(87) International publication number:
**WO 2024/070798 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158044**
**30.09.2022 JP 2022158045**

(71) Applicant: **LINTEC CORPORATION**
**Itabashi-ku**
**Tokyo 173-0001 (JP)**

(72) Inventors:
- **AJINO, Keiko**
  **Tokyo 173-0001 (JP)**
- **HASHIMOTO, Sae**
  **Tokyo 173-0001 (JP)**
- **MORIOKA, Takashi**
  **Tokyo 173-0001 (JP)**

(74) Representative: **J A Kemp LLP**
**80 Turnmill Street**
**London EC1M 5QU (GB)**

(54) **ALIPHATIC POLYCARBONATE RESIN, CROSSLINKED ALIPHATIC POLYCARBONATE RESIN, METHODS FOR PRODUCING SAME, AND ADHESIVE SHEET**

(57) An aliphatic polycarbonate resin having an ether structure in its main chain and having a structure in which a repeating unit represented by Formula (Ia) below, a repeating unit represented by Formula (Ib) below, a repeating unit represented by Formula (Ic) below, and a repeating unit represented by Formula (Id) below are randomly copolymerized. It is thereby possible to provide a novel aliphatic polycarbonate resin and a novel crosslinked aliphatic polycarbonate resin that are obtained using carbon dioxide as a production raw material and that have a low glass-transition temperature (Tg).

[Chemical Formula 1]

EP 4 596 604 A1

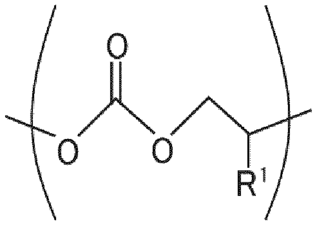

...(Ia)

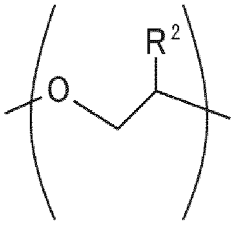

...(Ib)

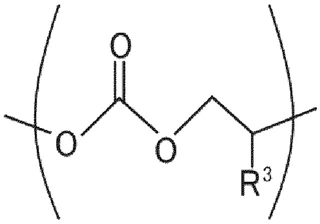

...(Ic)

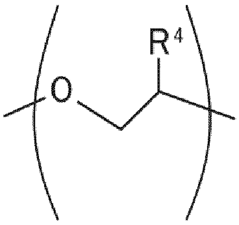

...(Id)

(In Formula (Ia) and Formula (Ib), $R^1$ and $R^2$ are each a hydrocarbon group whose carbon number is 4 or more, and may be the same or different. In Formula (Ic) and Formula (Id), $R^3$ and $R^4$ are each a hydrocarbon group having a crosslinkable functional group and may be the same or different.)

[FIG. 1]

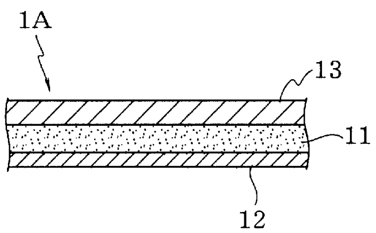

## Description

[Technical Field]

The present invention relates to a novel aliphatic polycarbonate resin, a crosslinked aliphatic polycarbonate resin, a method of producing a crosslinked aliphatic polycarbonate resin, and a pressure sensitive adhesive sheet using an aliphatic polycarbonate resin as the pressure sensitive adhesive.

[Background Art]

In recent years, with the growing demand for the creation of a recycling-based society, gases such as carbon dioxide, methane, and carbon monoxide have been attracting attention as sustainable carbon raw materials. For example, it has been reported that an aliphatic polycarbonate having only an aliphatic (non-aromatic) group in the main chain can be produced by copolymerizing carbon dioxide and epoxide, and there is interest in chemical products and their production techniques that use gases such as carbon dioxide as raw materials.

Since carbon dioxide is considered to be the cause of global warming, the effective utilization of carbon dioxide emitted from factories in the process of making various materials is useful for environmental protection.

Patent Document 1 proposes a polyalkylene carbonate resin containing three types of repeating units that is obtained by copolymerizing an epoxide compound, a compound having an epoxy group and an acrylate structure, and carbon dioxide under the presence of a heterogeneous catalyst.

Meanwhile, conventionally, acrylic-based pressure sensitive adhesives whose base resins are acrylic-based polymers have been widely used as pressure sensitive adhesives. Acrylic-based pressure sensitive polymers are usually obtained by polymerizing monomers that are primarily alkyl (meth)acrylates having alkyl groups whose carbon number is 2 to 12.

The acrylic-based pressure sensitive adhesives as described above exhibit good adhesive strength to materials having highly polar surfaces (high-polarity materials), such as glass, polycarbonate resin, and acrylic resin, but are difficult to exhibit good adhesive strength to materials having low polar surfaces (low-polarity materials), such as polyethylene, polypropylene, and other polyolefin resins.

In this context, tackifying resins may be added to acrylic-based pressure sensitive adhesives to improve their adhesive strength to low-polarity materials. However, improving the adhesive strength to low-polarity materials tends to reduce the adhesive strength to high-polarity materials, and it has not been easy to achieve the adhesive strength to both materials. As will be understood, in addition to adhesive strength, holding power is also an important factor of the properties of pressure sensitive adhesive.

On the other hand, Patent Document 2 proposes a photopolymerizable composition that contains a monomer mainly comprising an alkyl (meth)acrylate having a 2-12C alkyl group, a tackifying resin, and a photopolymerization initiator and that is photopolymerized by ultraviolet rays, wherein the above tackifying resin is composed of a hydrogenated alicyclic hydrocarbon resin having a predetermined amount of hydroxyl groups and a hydrogenated non-polar alicyclic hydrocarbon resin.

[Prior Art Documents]

[Patent Documents]

[Patent Document 1] Japanese translation of PCT international application, No. 2015-533920A
[Patent Document 2] JP2003-96116A

[Summary of the Invention]

[Problems to be solved by the Invention]

The problem to be solved by the invention described in Patent Document 1 is to provide a polyalkylene carbonate resin that can exhibit thermal stability and mechanical properties such as a larger molecular weight and an improved strength. Conventional polycarbonate resins, including this polyalkylene carbonate resin, have a high glass-transition temperature (Tg) due to the rigidity of the polycarbonate structure. Thus, they are unsuitable for fields requiring flexibility or as pressure sensitive adhesives.

The present invention has been made in view of such actual circumstances, and objects of the present invention

include providing a novel aliphatic polycarbonate resin and a novel crosslinked aliphatic polycarbonate resin that are obtained using carbon dioxide as a production raw material and that have a low glass-transition temperature (Tg) and providing a method of producing a crosslinked aliphatic polycarbonate resin that is obtained using carbon dioxide as a production raw material and that has a low glass-transition temperature (Tg). Another object of the present invention is to provide a pressure sensitive adhesive sheet that exhibits good adhesive strength to both high-polarity and low-polarity materials and that is also excellent in the holding power while using carbon dioxide as a production raw material.

[Means for solving the Problems]

To achieve the above objects, first, the present invention provides an aliphatic polycarbonate resin having an ether structure in its main chain and having a structure in which a repeating unit represented by Formula (Ia) below, a repeating unit represented by Formula (Ib) below, a repeating unit represented by Formula (Ic) below, and a repeating unit represented by Formula (Id) below are randomly copolymerized (Invention 1).

[Chemical Formula 1]

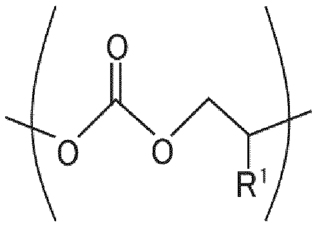

···(Ia)

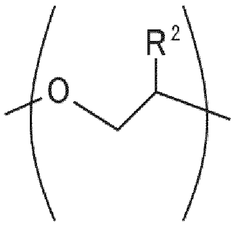

···(Ib)

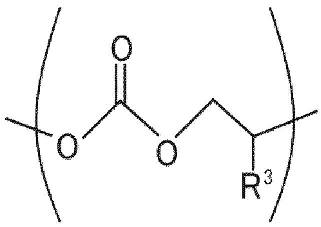

···(Ic)

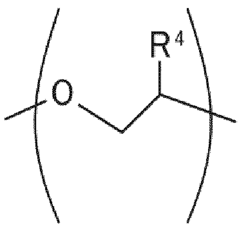

···(Id)

(In Formula (Ia) and Formula (Ib), $R^1$ and $R^2$ are each a hydrocarbon group whose carbon number is 4 or more, and may be the same or different. In Formula (Ic) and Formula (Id), $R^3$ and $R^4$ are each a hydrocarbon group having a crosslinkable functional group and may be the same or different.)

In the aliphatic polycarbonate resin according to the above invention (Invention 1), the above $R^1$ and $R^2$ are each

a hydrocarbon group whose carbon number is 4 or more so that the hydrocarbon groups in the side chains are relatively long, thereby making the glass-transition temperature (Tg) low, and the aliphatic polycarbonate resin is suitable for the fields requiring flexibility. In addition, the relatively long hydrocarbon groups in the side chains allow the aliphatic polycarbonate resin to develop tackiness, and it is particularly suitable as a pressure sensitive adhesive. Moreover, since each of the above $R^3$ and $R^4$ is a hydrocarbon group having a crosslinkable functional group, crosslinking (preferably self-crosslinking) via the crosslinkable functional group allows the aliphatic polycarbonate resin to exhibit good cohesive strength, and it is more suitable as a pressure sensitive adhesive. Furthermore, the above aliphatic polycarbonate resin can be produced using carbon dioxide as a production raw material, and it is therefore possible to effectively utilize carbon dioxide.

In the above invention (Invention 1), the crosslinkable functional group may be preferably a (meth)acryloyl group or an allyl group (Invention 2).

In the above invention (Invention 1 or 2), the $R^3$ or the $R^4$ may preferably have an alkyl chain (Invention 3).

In the above invention or inventions (Invention or inventions 1 to 3), the $R^3$ or the $R^4$ may preferably have an ether structure (Invention 4).

In the above invention or inventions (Invention or inventions 1 to 4), the $R^3$ or the $R^4$ may preferably contain a structure represented by Formula (II) below (Invention 5).

$$CH_2{=}CH{-}C({=}O){-}O{-}X{-}O{-}\ ... \qquad (II)$$

(In Formula (II), X is an alkyl chain.)

In the above invention or inventions (Invention or inventions 1 to 5), the aliphatic polycarbonate resin may preferably contain 0.01 mol% or more and 10 mol% or less of the crosslinkable functional group (Invention 6).

In the above invention or inventions (Invention or inventions 1 to 6), the aliphatic polycarbonate resin may preferably contain 0.1 mass% or more and 99 mass% or less of units of the ether structure in the main chain (Invention 7).

In the above invention or inventions (Invention or inventions 1 to 7), the aliphatic polycarbonate resin may be preferably a polymerization reaction product of carbon dioxide and an epoxide (Invention 8).

In the above invention or inventions (Invention or inventions 1 to 8), the glass-transition temperature (Tg) may be preferably 5°C or lower (Invention 9).

Second, the present invention provides a crosslinked aliphatic polycarbonate resin obtained by crosslinking the aliphatic polycarbonate (Invention or inventions 1 to 9) (Invention 10).

In the above invention (Invention 10), the gel fraction may be preferably 15% or more and 85% or less (Invention 11).

In the above invention (Invention 10 or 11), the 5% weight loss temperature may be preferably 200°C or higher and 450°C or lower (Invention 12).

Third, the present invention provides a method of producing a crosslinked aliphatic polycarbonate resin, comprising irradiating the aliphatic polycarbonate resin (Invention or inventions 1 to 9) with energy rays to crosslink the aliphatic polycarbonate resin (Invention 13).

Fourth, the present invention provides a pressure sensitive adhesive sheet comprising a pressure sensitive adhesive layer composed of a pressure sensitive adhesive containing 50 mass% or more of an aliphatic polycarbonate resin that has an ether structure in its main chain and a crosslinkable functional group in its side chain, wherein an adhesive strength to polypropylene is **1.5** N/25 mm or more (Invention 14).

By having the above configuration and physical properties, the pressure sensitive adhesive sheet according to the above invention (Invention 14) exhibits good adhesive strength to both high-polarity and low-polarity materials and is also excellent in the holding power.

Fifth, the present invention provides a pressure sensitive adhesive sheet comprising a pressure sensitive adhesive layer composed of a pressure sensitive adhesive containing 50 mass% or more of a crosslinked aliphatic polycarbonate resin that is a crosslinked product of an aliphatic polycarbonate resin that has an ether structure in its main chain and a crosslinkable functional group in its side chain, wherein an adhesive strength to polypropylene is **1.5** N/25 mm or more (Invention 15).

By having the above configuration and physical properties, the pressure sensitive adhesive sheet according to the above invention (Invention 15) exhibits good adhesive strength to both high-polarity and low-polarity materials and is also excellent in the holding power. In particular, since the above crosslinked aliphatic polycarbonate resin is formed by crosslinking the above aliphatic polycarbonate resin, it has good cohesive strength, and the adhesive strength and holding power are more excellent.

In the above invention (Invention 15), the holding power according to JIS Z0237: 2009 may be preferably 8,000 seconds or more measured as a time until the pressure sensitive adhesive sheet falls off when attaching it to an adherend of stainless steel with a 25 mm×25 mm attaching area and applying a load of 9.8 N to the pressure sensitive adhesive sheet at a test temperature of 40°C (Invention 16).

In the above invention (Invention 14), the aliphatic polycarbonate resin may be preferably the aliphatic polycarbonate resin (Invention or inventions 1 to 9) (Invention 17).

In the above invention (Invention 15), the crosslinked aliphatic polycarbonate resin may be preferably the crosslinked aliphatic polycarbonate (Invention 10) (Invention 18).

[Advantageous Effect of the Invention]

According to the present invention, it is possible to provide a novel aliphatic polycarbonate resin and a novel crosslinked aliphatic polycarbonate resin that are obtained using carbon dioxide as a production raw material and that have a low glass-transition temperature (Tg). Moreover, according to the production method of the present invention, it is possible to produce a crosslinked aliphatic polycarbonate resin that is obtained using carbon dioxide as a production raw material and that has a low glass-transition temperature (Tg). Furthermore, the pressure sensitive adhesive sheet according to the present invention exhibits good adhesive strength to both high-polarity and low-polarity materials and is also excellent in the holding power while using carbon dioxide as a production raw material.

[Brief Description of Drawings]

[FIG. 1] FIG. 1 is a cross-sectional view of a pressure sensitive adhesive sheet according to an embodiment of the present invention.

[FIG. 2] FIG. 2 is a cross-sectional view of a pressure sensitive adhesive sheet according to another embodiment of the present invention.

[FIG. 3] FIG. 3 is a chart illustrating the results of $^1$H-NMR measurement for the polymer produced in Example 1.

[FIG. 4] FIG. 4 is a chart illustrating the results of $^1$H-NMR measurement for the polymer produced in Comparative Example 1.

[Embodiments for Carrying out the Invention]

Embodiments of the present invention will be described below.

<Aliphatic Polycarbonate Resin>

The aliphatic polycarbonate resin according to an embodiment of the present invention (which may be referred to as an "aliphatic polycarbonate resin A," hereinafter") has an ether structure in its main chain and has a structure in which a repeating unit represented by Formula (Ia) below, a repeating unit represented by Formula (Ib) below, a repeating unit represented by Formula (Ic) below, and a repeating unit represented by Formula (Id) below are randomly copolymerized (this structure may be referred to as a "structure SA," hereinafter).

[Chemical Formula 1]

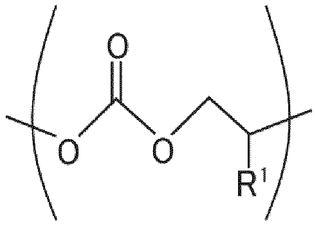

···(Ia)

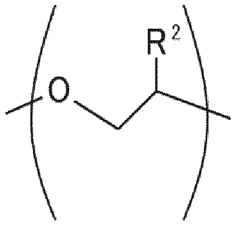

···(Ib)

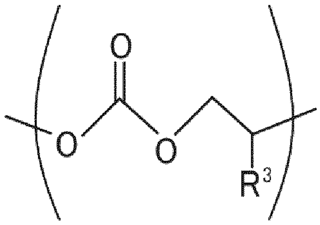

···(Ic)

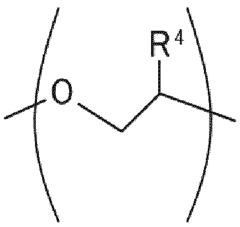

···(Id)

(In Formula (Ia) and Formula (Ib), $R^1$ and $R^2$ are each a hydrocarbon group whose carbon number is 4 or more, and may be the same or different. In Formula (Ic) and Formula (Id), $R^3$ and $R^4$ are each a hydrocarbon group having a crosslinkable functional group and may be the same or different.)

In the aliphatic polycarbonate resin A, $R^1$ and $R^2$ in the above structure SA are each a hydrocarbon group whose carbon number is 4 or more so that the hydrocarbon groups in the side chains are relatively long, thereby making the glass-transition temperature (Tg) low. This allows the aliphatic polycarbonate resin A to be suitable for the fields requiring flexibility, and it can be used, for example, in pressure sensitive adhesives, adhesives, coating agents, etc. In addition, the aliphatic polycarbonate resin A develops tackiness because the hydrocarbon groups in the side chains are relatively long, and is therefore suitable as a pressure sensitive adhesive. Moreover, since $R^3$ and $R^4$ in the above structure SA are each a hydrocarbon group having a crosslinkable functional group, the aliphatic polycarbonate resin A is crosslinked (preferably self-crosslinked) via the crosslinkable functional group and can thereby exhibit good cohesive strength, and it is more suitable as a pressure sensitive adhesive.

Furthermore, as will be described later, the aliphatic polycarbonate resin A can be produced using carbon dioxide as a production raw material. It is therefore possible to effectively utilize carbon dioxide when producing the aliphatic polycarbonate resin A.

As described above, $R^1$ and $R^2$ in Formula (Ia) and Formula (Ib) are each a hydrocarbon group whose carbon number is 4 or more. Examples of the hydrocarbon group include alkyl groups and aryl groups such as phenyl groups, among which alkyl groups may be preferred. Alkyl groups may be preferably those whose carbon number is 4 to 20, more

preferably those whose carbon number is 5 to 18, particularly preferably those whose carbon number is 6 to 10, and further preferably those whose carbon number is 6 to 9.

The above alkyl groups may be linear, branched, or cyclic, but linear or branched ones may be preferred. Examples of preferred linear alkyl groups include n-butyl, n-pentyl, n-hexyl, n-heptyl, n-octyl, n-nonyl, n-decyl, n-undecyl, and n-dodecyl groups, while examples of preferred branched alkyl groups include 2-ethylhexyl and 2-methylpentyl groups. Among these, from the viewpoints of low glass-transition temperature (Tg) and development of tackiness, an n-octyl, n-decyl, or n-dodecyl group may be preferred, an n-octyl or n-decyl group may be particularly preferred, and an n-octyl group may be further preferred. The above alkyl groups may have substituents.

The aliphatic polycarbonate resin A may contain two or more types of $R^1$ or may contain two or more types of $R^2$. As described above, $R^1$ and $R^2$ may be the same or different.

As described above, $R^3$ and $R^4$ in Formula (Ic) and Formula (Id) are each a hydrocarbon group having a crosslinkable functional group. Examples of the crosslinkable functional group include (meth)acryloyl groups; alkenyl groups such as allyl group and vinyl group; alkynyl groups; alkoxy groups, and oxy(meth)acryloyl groups. Among these, from the viewpoint of self-crosslinking, a (meth)acryloyl group or allyl group may be preferred, and a (meth)acryloyl group may be particularly preferred. In the present specification, (meth)acryloyl means both the acryloyl and the methacryloyl. The same applies to other similar terms.

The above $R^3$ or $R^4$ may preferably have an alkyl chain and particularly preferably have a linear alkyl chain. This can ensure the flexibility even after crosslinking, making it more suitable as a pressure sensitive adhesive. From the viewpoint of such effects, the carbon number of the alkyl chain may be preferably 1 to 20, more preferably 2 to 15, particularly preferably 3 to 10, and further preferably 4 to 8. The above alkyl chain may have a substituent.

The above $R^3$ or $R^4$ may preferably have an ether structure. This can impart flexibility to the aliphatic polycarbonate resin A obtained.

Specifically, the above $R^3$ or $R^4$ may preferably include a structure represented by Formula (II) or Formula (III) below. This allows the reaction of the crosslinkable functional group to progress efficiently, regardless of the alkyl group chain length in the side chain.

$$CH_2=CH\text{-}C(=O)\text{-}O\text{-}X\text{-}O\text{-} \ldots \qquad (II)$$

(In Formula (II), X is an alkyl chain.)

$$CH_2=CH\text{-}CH_2\text{-}Y\text{-}O\text{-} \ldots \qquad (III)$$

(In Formula (III), Y is a single bond or an alkyl chain.)

More specifically, the above $R^3$ or $R^4$ may be particularly preferably a structure represented by Formula (IV) or Formula (V) below.

$$CH_2=CH\text{-}C(=O)\text{-}O\text{-}X\text{-}O\text{-}CH_2\text{-} \ldots \qquad (IV)$$

(In Formula (IV), X is an alkyl chain.)

$$CH_2=CH\text{-}CH_2\text{-}Y\text{-}O\text{-}CH_2\text{-} \ldots \qquad (V)$$

(In Formula (V), Y is a single bond or an alkyl chain.)

The carbon number of the alkyl chain (X) in the above Formula (II) and Formula (IV) may be preferably 1 to 10, more preferably 2 to 8, particularly preferably 3 to 6, and further preferably 4 to 5. The carbon number of the alkyl chain (Y) in the above Formula (III) and Formula (V) may be preferably 1 to 10, more preferably 1 to 8, particularly preferably 2 to 6, and further preferably 2 to 4.

The aliphatic polycarbonate resin A may contain two or more types of $R^3$ or may contain two or more types of $R^4$. As described above, $R^3$ and $R^4$ may be the same or different.

The aliphatic polycarbonate resin A may preferably contain 0.01 mol% or more, more preferably 0.05 mol% or more, particularly preferably 0.1 mol% or more, and further preferably 0.3 mol% or more of the crosslinkable functional groups as above (crosslinkable functional groups possessed by $R^3$ and $R^4$). From another aspect, the aliphatic polycarbonate resin A may preferably contain 10 mol% or less, more preferably 5 mol% or less, particularly preferably 3 mol% or less, and further preferably 1 mol% or less of the crosslinkable functional groups. By containing the crosslinkable functional groups in the above amount, the aliphatic polycarbonate resin A can form a good crosslinked structure and exhibit a suitable cohesive strength as a pressure sensitive adhesive.

The aliphatic polycarbonate resin A may preferably contain 0.1 mol% or more, more preferably 0.5 mol% or more, particularly preferably 0.8 mol% or more, and further preferably 1 mol% or more of units of the ether structure in the main

chain (repeating unit represented by Formula (Ib) and repeating unit represented by Formula (Id)). From another aspect, the aliphatic polycarbonate resin A may preferably contain 99 mol% or less, more preferably 50 mol% or less, particularly preferably 20 mol% or less, and further preferably 10 mol% or less of units of the ether structure. By containing the units of the ether structure in the above amount, the aliphatic polycarbonate resin A effectively lowers the glass-transition temperature (Tg) and exhibits better tackiness. As the content ratio of ether structural units in the aliphatic polycarbonate resin A increases, the glass-transition temperature (Tg) of the aliphatic polycarbonate resin A may lower further, and the tackiness of the pressure sensitive adhesive tends to increase.

The number-average molecular weight of the aliphatic polycarbonate resin A may be preferably 15,000 or more, more preferably 20,000 or more, particularly preferably 50,000 or more, and further preferably 80,000 or more. From another aspect, the number-average molecular weight of the aliphatic polycarbonate resin A may be preferably 2,000,000 or less, more preferably 1,000,000 or less, particularly preferably 500,000 or less, and further preferably 300,000 or less. When the number-average molecular weight of the aliphatic polycarbonate resin A falls within the above range, the tackiness is better, and the cohesive strength after crosslinking is also better. In the present specification, the weight-average molecular weight refers to a standard polystyrene equivalent value that is measured by using a gel permeation chromatography (GPC) method.

The glass-transition temperature (Tg) of the aliphatic polycarbonate resin A may be preferably 5°C or lower, more preferably -10°C or lower, particularly preferably -20°C or lower, and further preferably -25°C or lower. This results in excellent flexibility and better tackiness. By having the above-described structure, the aliphatic polycarbonate resin A can achieve a low glass-transition temperature (Tg) as described above.

From another aspect, the glass-transition temperature (Tg) of the aliphatic polycarbonate resin A may be preferably -60°C or higher, more preferably -55°C or higher, particularly preferably -45°C or higher, and further preferably -40°C or higher. This provides good cohesive strength after crosslinking. The method of measuring the glass-transition temperature (Tg) in the present specification is as described in the testing example, which will be described later.

The gel fraction of the aliphatic polycarbonate resin A may be preferably 1% to 30%, particularly preferably 2% to 20%, and further preferably 4% to 10%. This allows the gel fraction after crosslinking to readily fall within the preferred range, which will be described later. The method of measuring the gel fraction in the present specification is as described in the testing example, which will be described later.

The 5% weight loss temperature of the aliphatic polycarbonate resin A may be preferably 210°C to 450°C, particularly preferably 220°C to 400°C, and further preferably 230°C to 350°C. This allows the 5% weight loss temperature after crosslinking to readily fall within the preferred range, which will be described later. The method of measuring the 5% weight loss temperature in the present specification is as described in the testing example, which will be described later.

The aliphatic polycarbonate resin A may be preferably a polymerization reaction product of carbon dioxide and an epoxide. The aliphatic polycarbonate resin A can be preferably produced by a production method including a step of polymerizing carbon dioxide ($CO_2$), an epoxide having $R^1$ and $R^2$ in the aforementioned Formula (Ia) and Formula (Ib) (which may be referred to as an "epoxide E1," hereinafter), and an epoxide having $R^3$ and $R^4$ in the aforementioned Formula Formula (Ic) and (Id) (which may be referred to as an "epoxide E2," hereinafter) under the presence of a polymerization catalyst, while controlling the water content to a predetermined amount or less as necessary (see, for example, "WO2011/142259"). By selecting an appropriate polymerization catalyst here, an ether structure can be introduced into the main chain of the aliphatic polycarbonate resin A. Since the aliphatic polycarbonate resin A can be produced using carbon dioxide as a production raw material, it is possible to effectively utilize carbon dioxide.

The above epoxide E1 is not particularly limited, provided that it can constitute the repeating unit represented by Formula (Ia) and the repeating unit represented by Formula (Ib) in the aforementioned structure SA by the above polymerization reaction, but may be preferably a compound represented by Formula (VI) below or a derivative of the compound. In the present specification, the term "derivative" means a compound in which one or more hydrogen atoms of the original compound are substituted with a group (substituent) other than a hydrogen atom.

[Chemical Formula 3]

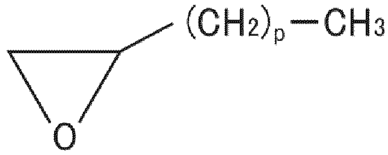

···(VI)

(In Formula (VI), p is an integer of 3 or more.)

In Formula (VI), p may be preferably 3 to 15, more preferably 4 to 13, particularly preferably 5 to 11, and further preferably 6 to 9.

Specific examples of the above epoxide E1 include 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, and 1,2-epoxydodecane. Among these, from the viewpoints of low glass-transition temperature (Tg) and development of tackiness, 1,2-epoxyhexane, 1,2-epoxyoctane, 1,2-epoxydecane, etc. may be preferred, 1,2-epoxyoctane or 1,2-epoxydecane may be particularly preferred, and 1,2-epoxydecane may be further preferred. The epoxides listed above may have substituents.

The above epoxide E2 is not particularly limited, provided that it can constitute the repeating unit represented by Formula (Ic) and the repeating unit represented by Formula (Id) in the aforementioned structure SA by the above polymerization reaction, but may be preferably a compound represented by Formula (VII) or Formula (VIII) below or a derivative of the compound.

[Chemical Formula 4]

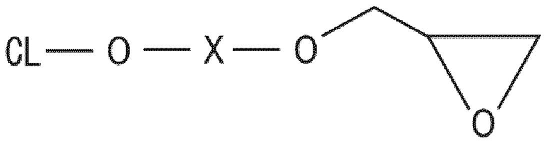

···(VII)

[Chemical Formula 5]

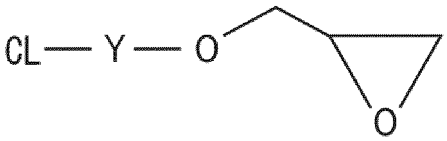

···(VIII)

CL in Formula (VII) and Formula (VIII) is a crosslinkable functional group. The crosslinkable functional group is the same as the crosslinkable functional group possessed by $R^3$ and $R^4$ in the aforementioned Formula (Ic) and Formula (Id). In particular, CL in Formula (VII) may be preferably a (meth)acryloyl group, and CL in Formula (VIII) may be preferably an allyl group.

In Formula (VII), X is an alkyl chain. The carbon number of the alkyl chain is the same as the carbon number of the alkyl chain (X) in the aforementioned Formula (II) and Formula (IV). In Formula (VIII), Y is a single bond or an alkyl chain. The carbon number of the alkyl chain is the same as the carbon number of the alkyl chain (Y) in Formula (III) and Formula (V) described previously.

Specific examples of the above epoxide E2 include 4-hydroxyalkyl (meth)acrylate glycidyl ethers such as 4-hydroxymethyl (meth)acrylate glycidyl ether, 4-hydroxyethyl (meth)acrylate glycidyl ether, 4-hydroxypropyl (meth)acrylate glycidyl ether, 4-hydroxybutyl (meth)acrylate glycidyl ether, 4-hydroxypentyl (meth)acrylate glycidyl ether, and 4-hydroxyhexyl (meth)acrylate glycidyl ether; allyl glycidyl ethers; and allyl alkyl glycidyl ethers such as allyl methyl glycidyl ether. Among these, from the viewpoints of flexibility after crosslinking and suitability as a pressure sensitive adhesive accordingly, 4-hydroxybutyl (meth)acrylate glycidyl ether or allyl glycidyl ether may be preferred, and 4-hydroxybutyl acrylate glycidyl ether may be particularly preferred. The epoxides listed above may have substituents.

The above epoxides E1 and E2 used in the polymerization reaction step may each be one type or two or more types. When two or more types are used, the combination and ratio may be appropriately adjusted in accordance with the purpose.

The ratio of the above epoxides E1 and E2 used in the polymerization reaction step may be preferably 99.99:0.01 to 90:10, more preferably 99.95:0.05 to 95:5, particularly preferably 99.9:0.1 to 99:1, and further preferably 99.7:0.3 to 99.5:0.5 as the molar ratio.

The polymerization catalyst used in the production of the aliphatic polycarbonate resin A is not particularly limited, provided that it can introduce an ether structure into the main chain of the aliphatic polycarbonate resin A, but specifically, a double metal cyanide complex catalyst (referred to as a "DMC catalyst") may be preferred. As the metals in the DMC catalyst, a combination of cobalt and zinc, cobalt and nickel, a combination of zinc and nickel, etc. may be preferred, among which a combination of cobalt and zinc may be particularly preferred. As the DMC catalyst, $Zn_3(Co[CN]_6)_2$, $Co(Ni[CN]_4)$, $Zn(Ni(CN)_4)$, etc. may be preferred, among which $Zn_3(Co[CN]_6)_2$ may be particularly preferred.

As described above, the polymerization reaction of the aliphatic polycarbonate resin A may be preferably carried out in a pressure vessel. By changing the amount of polymerization catalyst used in this polymerization reaction, the carbon dioxide pressure, the polymerization temperature, the polymerization time, etc., it is possible to adjust the content ratio of ether structural units in the aliphatic polycarbonate resin A and the molecular weight of the aliphatic polycarbonate

resin A.

The amount of polymerization catalyst used, for example in the case of a DMC catalyst, may be preferably 0.1 to 15 mg, particularly preferably 0.1 to 10 mg, and further preferably 0.1 to 2 mg with respect to 1 g of epoxy monomer. When the amount of polymerization catalyst used is reduced, the molecular weight of the aliphatic polycarbonate resin A tends to increase.

The pressure of carbon dioxide may be preferably 0.1 to 10 MPa, more preferably 0.3 to 7.5 MPa, particularly preferably 0.5 to 6 MPa, and further preferably 0.7 to 5 MPa. When the carbon dioxide pressure is increased, the content ratio of the carbonate structural units in the aliphatic polycarbonate resin A tends to increase.

The amount of carbon dioxide introduced into the aliphatic polycarbonate resin A ($CO_2$ introduction ratio) may be preferably 10 mass% or more, particularly preferably 15 mass% or more, and further preferably 20 mass% or more. The method of calculating the $CO_2$ introduction ratio is as described in the testing example, which will be described later.

The polymerization temperature may be preferably -15°C to 95°C, particularly preferably 0°C to 75°C, and further preferably 25°C to 70°C. When the polymerization temperature is increased, the content ratio of ether structural units can be increased, and the polymerization time can be shortened.

The polymerization time may be preferably 1 to 48 hours, particularly preferably 2 to 30 hours, and further preferably 5 to 24 hours. When the polymerization time is increased within this range, the molecular weight of the aliphatic polycarbonate resin A tends to increase.

The polymerization method may be any of solution polymerization and bulk polymerization. Examples of solvent used in solution polymerization (polymerization solvent) include aliphatic hydrocarbons such as hexane, heptane, and cyclohexane; aromatic hydrocarbons such as toluene and xylene; halogenated hydrocarbons such as methylene chloride and ethylene chloride; alcohols such as methanol, ethanol, propanol, butanol, and 1-methoxy-2-propanol; ketones such as acetone, methyl ethyl ketone, 2-pentanone, isophorone, and cyclohexanone; esters such as ethyl acetate and butyl acetate; carbonate-based solvents such as dimethyl carbonate and ethylene carbonate; and cellosolve-based solvents such as ethyl cellosolve.

The aliphatic polycarbonate resin A described above can be preferably used as a pressure sensitive adhesive. The pressure sensitive adhesive may consist only of the aliphatic polycarbonate resin A, or may contain the aliphatic polycarbonate resin A and other components than the aliphatic polycarbonate resin **A.**

The adhesive strength of a pressure sensitive adhesive sheet having a pressure sensitive adhesive layer (thickness: 25 μm) composed of the above pressure sensitive adhesive to stainless steel (SUS304, #360-polishing) may be preferably 1 N/25 mm or more, more preferably 5 N/25 mm or more, particularly preferably 7 N/25 mm or more, and further preferably 10 N/25 mm or more as the lower limit. On the other hand, the upper limit of the above adhesive strength is not particularly limited, but with consideration for cases in which reworkability is required, it may be preferably 45 N/25 mm or less, particularly preferably 40 N/25 mm or less, and further preferably 30 N/25 mm or less.

The adhesive strength of a pressure sensitive adhesive sheet having a pressure sensitive adhesive layer (thickness: 25 μm) composed of the above pressure sensitive adhesive to polycarbonate may be preferably 3 N/25 mm or more, more preferably 5 N/25 mm or more, particularly preferably 7 N/25 mm or more, and further preferably 10 N/25 mm or more as the lower limit. On the other hand, the upper limit of the above adhesive strength is not particularly limited, but with consideration for cases in which reworkability is required, it may be preferably 40 N/25 mm or less, particularly preferably 30 N/25 mm or less, and further preferably 25 N/25 mm or less.

The adhesive strength of a pressure sensitive adhesive sheet having a pressure sensitive adhesive layer (thickness: 25 μm) composed of the above pressure sensitive adhesive to polypropylene may be preferably 0.1 N/25 mm or more, more preferably 1 N/25 mm or more, particularly preferably 3 N/25 mm or more, and further preferably 5 N/25 mm or more as the lower limit. On the other hand, the upper limit of the above adhesive strength is not particularly limited, but with consideration for cases in which reworkability is required, it may be preferably 25 N/25 mm or less, particularly preferably 20 N/25 mm or less, and further preferably 15 N/25 mm or less.

The specific method of testing the adhesive strength in the present specification is as described in the testing example, which will be described later.

The holding power according to JIS Z0237: 2009 (seconds) of a pressure sensitive adhesive sheet having a pressure sensitive adhesive layer (thickness: 25 μm) composed of the above pressure sensitive adhesive (the holding power is represented by a time (maximum 70,000 seconds) until the pressure sensitive adhesive sheet falls off when attaching it to an adherend of stainless steel (SUS304, #360-polishing) with a 25 mm×25 mm attaching area and applying a load of 9.8 N to the pressure sensitive adhesive sheet at a test temperature of 40°C) may be preferably 1,000 seconds or more, more preferably 2,000 seconds or more, particularly preferably 3,000 seconds or more, and further preferably 4,000 seconds or more. The specific method of testing the holding power in the present specification is as described in the testing example, which will be described later.

<Crosslinked Aliphatic Polycarbonate Resin>

The crosslinked aliphatic polycarbonate resin according to an embodiment of the present invention (which may be referred to as a "crosslinked aliphatic polycarbonate resin B," hereinafter) is obtained by crosslinking the aliphatic polycarbonate resin A according to the aforementioned embodiment. The crosslinked aliphatic polycarbonate resin B maintains a low glass-transition temperature (Tg) like the aliphatic polycarbonate resin A and develops flexibility and tackiness, while its crosslinked structure increases the cohesive strength, making it more suitable as a pressure sensitive adhesive.

The crosslinking of the aliphatic polycarbonate resin A may be performed using a desired crosslinker, but self-crosslinking may be preferred. That is, the crosslinked aliphatic polycarbonate resin B according to the present embodiment may be preferably obtained through reacting the crosslinkable functional groups (crosslinkable functional groups possessed by $R^3$ and $R^4$ in Formula (Ic) and Formula (Id)) possessed by the side chains of the aliphatic polycarbonate resin A with each other and crosslinking a plurality of aliphatic polycarbonate resins A via the crosslinkable functional groups.

The crosslinked aliphatic polycarbonate resin B can be preferably produced by irradiating the aliphatic polycarbonate resin A with energy rays. Irradiation with the energy rays causes the crosslinkable functional groups possessed by the side chains of the aliphatic polycarbonate resin A to react with each other, thus forming a crosslinked structure.

Here, the energy rays refer to electromagnetic wave or charged particle radiation having an energy quantum, and specific examples of the energy rays include ultraviolet rays and electron rays. Among the energy rays, ultraviolet rays may be particularly preferred because of easy management.

The irradiation with ultraviolet rays can be performed by using a high-pressure mercury lamp, an electrodeless lamp, an LED lamp, a xenon lamp, or the like. The irradiation amount as illuminance of ultraviolet rays may be preferably about 50 to 1,000 $mW/cm^2$. The light amount of ultraviolet rays may be preferably 50 to 10,000 $mJ/cm^2$, more preferably 80 to 5,000 $mJ/cm^2$, and particularly preferably 200 to 2,000 $mJ/cm^2$. On the other hand, the irradiation with electron rays can be performed with an electron ray accelerator or the like, and the irradiation amount of the electron rays may be preferably about 10 to 1,000 krad.

When ultraviolet rays are used as the energy rays for crosslinking the aliphatic polycarbonate resin A, it may be preferred to compound a photopolymerization initiator with the aliphatic polycarbonate resin A. By compounding a photopolymerization initiator in this way, the aliphatic polycarbonate resin A can be crosslinked efficiently, and the crosslinking time and the irradiation amount of energy rays can be reduced.

Examples of such photopolymerization initiator include benzoin, benzoin methyl ether, benzoin ethyl ether, benzoin isopropyl ether, benzoin-n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexyl phenyl ketone, 2-methyl-1-[4-(methylthio)phenyl]-2-morpholino-propan-1-one, 4-(2-hydroxyethoxy) phenyl-2-(hydroxy-2-propyl) ketone, benzophenone, p-phenylbenzophenone, 4,4'-diethylaminobenzophenone, dichlorobenzophenone, 2-methylanthraquinone, 2-ethylanthraquinone, 2-tert-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylaminobenzoic ester, oligo[2-hydroxy-2-methyl-1[4-(1-methylvinyl)phenyl]propanone], 2,4,6-trimethylbenzoyl-diphenyl-phosphine oxide, bis(2,4,6-trimethylbenzoyl)-phenylphosphine oxide, 2-hydroxy-4'-(2-hydroxyethoxy)-2-methylpropiophenone, and lithium phenyl(2,4,6-trimethylbenzoyl) phosphinate. These may each be used alone, or two or more types may also be used in combination.

The compounding amount of the photopolymerization initiator may be preferably 0.1 mass parts or more, more preferably 0.5 mass parts or more, particularly preferably 1 mass part or more, and further preferably 1.3 mass parts or more with respect to 100 mass parts of the aliphatic polycarbonate resin A. From another aspect, the above compounding amount of the photopolymerization initiator may be preferably 10 mass parts or less, more preferably 7 mass parts or less, particularly preferably 5 mass parts or less, and further preferably 3 mass parts or less.

The gel fraction of the crosslinked aliphatic polycarbonate resin B may be preferably 15% or more, more preferably 20% or more, particularly preferably 30% or more, and further preferably 40% or more. This allows the crosslinked aliphatic polycarbonate resin B to exhibit excellent cohesive strength as a pressure sensitive adhesive. From another aspect, the above gel fraction may be preferably 85% or less, more preferably 80% or less, particularly preferably 75% or less, and further preferably 70% or less. This can ensure flexibility and maintain good adhesive strength.

The glass-transition temperature (Tg) of the crosslinked aliphatic polycarbonate resin B may be preferably 5°C or lower, more preferably -10°C or lower, particularly preferably -20°C or lower, and further preferably -30°C or lower. This results in excellent flexibility and better tackiness. The crosslinked aliphatic polycarbonate resin B has a structure in which the aliphatic polycarbonate resin A having the aforementioned structure is crosslinked, and can thereby achieve a low glass-transition temperature (Tg) as described above.

From another aspect, the glass-transition temperature (Tg) of the crosslinked aliphatic polycarbonate resin B may be preferably -60°C or higher, more preferably -55°C or higher, particularly preferably -50°C or higher, and further

preferably -45°C or higher. This results in better cohesive strength.

The 5% weight loss temperature of the crosslinked aliphatic polycarbonate resin B may be preferably 200°C or higher, more preferably 210°C or higher, particularly preferably 220°C or higher, and further preferably 230°C or higher. This allows the crosslinked aliphatic polycarbonate resin B to have excellent heat resistance and to be suitable as a pressure sensitive adhesive used at high temperatures. The upper limit of the 5% weight loss temperature of the crosslinked aliphatic polycarbonate resin B is not particularly limited, but usually may be preferably 450°C or lower, more preferably 400°C or lower, particularly preferably 350°C or lower, and further preferably 300°C or lower.

The crosslinked aliphatic polycarbonate resin B described above can be preferably used as a pressure sensitive adhesive. The pressure sensitive adhesive may consist only of the crosslinked aliphatic polycarbonate resin **B,** or may contain the crosslinked aliphatic polycarbonate resin B and other components than the crosslinked aliphatic polycarbonate resin **B.** The pressure sensitive adhesive may also contain a photopolymerization initiator or its decomposition product.

The adhesive strength of a pressure sensitive adhesive sheet having a pressure sensitive adhesive layer (thickness: 25 μm) composed of the above pressure sensitive adhesive to stainless steel (SUS304, #360-polishing) may be preferably 1 N/25 mm or more, more preferably 3 N/25 mm or more, particularly preferably 5 N/25 mm or more, and further preferably 10 N/25 mm or more as the lower limit. On the other hand, the upper limit of the above adhesive strength is not particularly limited, but with consideration for cases in which reworkability is required, it may be preferably 30 N/25 mm or less, particularly preferably 25 N/25 mm or less, and further preferably 20 N/25 mm or less.

The adhesive strength of a pressure sensitive adhesive sheet having a pressure sensitive adhesive layer (thickness: 25 μm) composed of the above pressure sensitive adhesive to polycarbonate may be preferably 1 N/25 mm or more, more preferably 2 N/25 mm or more, particularly preferably 5 N/25 mm or more, and further preferably 10 N/25 mm or more as the lower limit. On the other hand, the upper limit of the above adhesive strength is not particularly limited, but with consideration for cases in which reworkability is required, it may be preferably 35 N/25 mm or less, particularly preferably 30 N/25 mm or less, and further preferably 25 N/25 mm or less.

The adhesive strength of a pressure sensitive adhesive sheet having a pressure sensitive adhesive layer (thickness: 25 μm) composed of the above pressure sensitive adhesive to polypropylene may be preferably 1 N/25 mm or more, more preferably 3 N/25 mm or more, particularly preferably 5 N/25 mm or more, and further preferably 7 N/25 mm or more as the lower limit. On the other hand, the upper limit of the above adhesive strength is not particularly limited, but with consideration for cases in which reworkability is required, it may be preferably 25 N/25 mm or less, particularly preferably 20 N/25 mm or less, and further preferably 15 N/25 mm or less.

The holding power according to JIS Z0237: 2009 (seconds) of a pressure sensitive adhesive sheet having a pressure sensitive adhesive layer (thickness: 25 μm) composed of the above pressure sensitive adhesive (the holding power is represented by a time (maximum 70,000 seconds) until the pressure sensitive adhesive sheet falls off when attaching it to an adherend of stainless steel (SUS304, #360-polishing) with a 25 mm×25 mm attaching area and applying a load of 9.8 N to the pressure sensitive adhesive sheet at a test temperature of 40°C) may be preferably 8,000 seconds or more, more preferably 10,000 seconds or more, particularly preferably 30,000 seconds or more, and further preferably 70,000 seconds or more.

The aliphatic polycarbonate resin A and the crosslinked aliphatic polycarbonate resin B described above can be used as pressure sensitive adhesives, adhesives, coating agents, etc., due to their flexibility resulting from their low glass-transition temperatures (Tg). Moreover, the aliphatic polycarbonate resin A and the crosslinked aliphatic polycarbonate resin B can be particularly suitably used as pressure sensitive adhesives because they exhibit tackiness. For example, they can be used for attaching labels to various containers, daily necessities, electrical/electronic devices, various machines, medical instruments, and the like and for bonding members together, etc.

<Pressure Sensitive Adhesive Sheet>

Embodiments of the pressure sensitive adhesive sheet according to the present invention will be described below.

The pressure sensitive adhesive sheet according to a first embodiment of the present invention comprises a pressure sensitive adhesive layer composed of a pressure sensitive adhesive containing 50 mass% or more of an aliphatic polycarbonate resin that has an ether structure in its main chain and a crosslinkable functional group in its side chain (this aliphatic polycarbonate resin may be referred to as an "aliphatic polycarbonate resin A0," hereinafter), wherein an adhesive strength to polypropylene is 1.5 N/25 mm or more. The specific method of testing the adhesive strength in the present specification is as described in the testing example, which will be described later.

The pressure sensitive adhesive sheet according to a second embodiment of the present invention comprises a pressure sensitive adhesive layer composed of a pressure sensitive adhesive containing 50 mass% or more of a crosslinked aliphatic polycarbonate resin (which may be referred to as a "crosslinked aliphatic polycarbonate resin B0," hereinafter) that is a crosslinked product of an aliphatic polycarbonate resin (aliphatic polycarbonate resin A0) that

has an ether structure in its main chain and a crosslinkable functional group in its side chain, wherein an adhesive strength to polypropylene is 1.5 N/25 mm or more.

In the pressure sensitive adhesive sheet according to the first embodiment, the pressure sensitive adhesive layer is composed of a pressure sensitive adhesive containing 50 mass% or more of the aliphatic polycarbonate resin A0 and has the above adhesive strength, thereby exhibiting good adhesive strength to both high-polarity and low-polarity materials, and the holding power is also excellent. In the pressure sensitive adhesive sheet according to the second embodiment, the pressure sensitive adhesive layer is composed of a pressure sensitive adhesive containing 50 mass% or more of the crosslinked aliphatic polycarbonate resin B0 and has the above adhesive strength, thereby exhibiting good adhesive strength to both high-polarity and low-polarity materials, and the holding power is also excellent. In particular, since the above crosslinked aliphatic polycarbonate resin B0 is formed by crosslinking the above aliphatic polycarbonate resin A0, it has good cohesive strength, and the adhesive strength and holding power are more excellent.

As will be described later, the above aliphatic polycarbonate resin A0 and crosslinked aliphatic polycarbonate resin B0 can be produced using carbon dioxide as a production raw material. In the pressure sensitive adhesive sheets according to the first and second embodiments, therefore, carbon dioxide can be effectively utilized when producing them.

Here, examples of high-polarity materials (materials having highly polar surfaces) include metals such as stainless steel, aluminum, and copper; glass; and resins such as polycarbonate resin, acrylic resin, and polyethylene terephthalate resin. Examples of low-polarity materials (materials having low polar surfaces) include polyolefin resins such as polyethylene and polypropylene, polyacetal resin, and polytetrafluoroethylene resin.

The adhesive strength of the pressure sensitive adhesive sheet according to the first embodiment to polypropylene may be preferably 1.5 N/25 mm or more, more preferably 3 N/25 mm or more, particularly preferably 5 N/25 mm or more, and further preferably 7 N/25 mm or more as the lower limit. On the other hand, the upper limit of the above adhesive strength is not particularly limited, but with consideration for cases in which reworkability is required, it may be preferably 25 N/25 mm or less, particularly preferably 20 N/25 mm or less, and further preferably 15 N/25 mm or less.

The adhesive strength of the pressure sensitive adhesive sheet according to the first embodiment to stainless steel (SUS304, #360-polishing) may be preferably 1 N/25 mm or more, more preferably 5 N/25 mm or more, particularly preferably 7 N/25 mm or more, and further preferably 10 N/25 mm or more as the lower limit. The pressure sensitive adhesive sheet according to the first embodiment can thus exhibit good adhesive strength even to high-polarity materials. On the other hand, the upper limit of the above adhesive strength is not particularly limited, but with consideration for cases in which reworkability is required, it may be preferably 45 N/25 mm or less, particularly preferably 40 N/25 mm or less, and further preferably 30 N/25 mm or less.

The adhesive strength of the pressure sensitive adhesive sheet according to the first embodiment to polycarbonate may be preferably 3 N/25 mm or more, more preferably 5 N/25 mm or more, particularly preferably 7 N/25 mm or more, and further preferably 10 N/25 mm or more as the lower limit. The pressure sensitive adhesive sheet according to the first embodiment can thus exhibit good adhesive strength even to high-polarity materials. On the other hand, the upper limit of the above adhesive strength is not particularly limited, but with consideration for cases in which reworkability is required, it may be preferably 40 N/25 mm or less, particularly preferably 30 N/25 mm or less, and further preferably 25 N/25 mm or less.

The holding power according to JIS Z0237: 2009 (seconds) of the pressure sensitive adhesive sheet according to the first embodiment (the holding power is represented by a time (maximum 70,000 seconds) until the pressure sensitive adhesive sheet falls off when attaching it to an adherend of stainless steel (SUS304, #360-polishing) with a 25 mm×25 mm attaching area and applying a load of **9.8** N to the pressure sensitive adhesive sheet at a test temperature of 40°C) may be preferably 1,000 seconds or more, more preferably 2,000 seconds or more, particularly preferably 3,000 seconds or more, and further preferably 4,000 seconds or more. The pressure sensitive adhesive sheet according to the first embodiment can exhibit excellent holding power as described above. The specific method of testing the holding power in the present specification is as described in the testing example, which will be described later.

The adhesive strength of the pressure sensitive adhesive sheet according to the second embodiment to polypropylene may be preferably 1.5 N/25 mm or more, more preferably 3 N/25 mm or more, particularly preferably 5 N/25 mm or more, and further preferably 7 N/25 mm or more as the lower limit. On the other hand, the upper limit of the above adhesive strength is not particularly limited, but with consideration for cases in which reworkability is required, it may be preferably 25 N/25 mm or less, particularly preferably 20 N/25 mm or less, and further preferably 15 N/25 mm or less.

The adhesive strength of the pressure sensitive adhesive sheet according to the second embodiment to stainless steel (SUS304, #360-polishing) may be preferably 1 N/25 mm or more, more preferably 3 N/25 mm or more, particularly preferably 5 N/25 mm or more, and further preferably 10 N/25 mm or more as the lower limit. The pressure sensitive adhesive sheet according to the second embodiment can thus exhibit good adhesive strength even to high-polarity materials. On the other hand, the upper limit of the above adhesive strength is not particularly limited, but with consideration for cases in which reworkability is required, it may be preferably 30 N/25 mm or less, particularly preferably 25 N/25 mm or less, and further preferably 20 N/25 mm or less.

The adhesive strength of the pressure sensitive adhesive sheet according to the second embodiment to

polycarbonate may be preferably 1 N/25 mm or more, more preferably 2 N/25 mm or more, particularly preferably 5 N/25 mm or more, and further preferably 10 N/25 mm or more as the lower limit. The pressure sensitive adhesive sheet according to the second embodiment can thus exhibit good adhesive strength even to high-polarity materials. On the other hand, the upper limit of the above adhesive strength is not particularly limited, but with consideration for cases in which reworkability is required, it may be preferably 35 N/25 mm or less, particularly preferably 30 N/25 mm or less, and further preferably 25 N/25 mm or less.

The holding power according to JIS Z0237: 2009 (seconds) of the pressure sensitive adhesive sheet according to the second embodiment (the holding power is represented by a time (maximum 70,000 seconds) until the pressure sensitive adhesive sheet falls off when attaching it to an adherend of stainless steel (SUS304, #360-polishing) with a 25 mm×25 mm attaching area and applying a load of 9.8 N to the pressure sensitive adhesive sheet at a test temperature of 40°C) may be preferably 8,000 seconds or more, more preferably 10,000 seconds or more, particularly preferably 30,000 seconds or more, and further preferably 70,000 seconds or more. The pressure sensitive adhesive sheet according to the second embodiment can exhibit excellent holding power as described above.

1. Pressure Sensitive Adhesive

(1) Pressure Sensitive Adhesive in First Embodiment

The pressure sensitive adhesive constituting the pressure sensitive adhesive layer in the pressure sensitive adhesive sheet according to the first embodiment contains 50 mass% or more of the aliphatic polycarbonate resin A0 having an ether structure in its main chain and a crosslinkable functional group in its side chain. The aliphatic polycarbonate resin A0 may be preferably the aliphatic polycarbonate resin A in the aforementioned embodiment.

The aliphatic polycarbonate resin A0 may be preferably a polymerization reaction product of carbon dioxide and an epoxide. Specifically, the aliphatic polycarbonate resin A0 can be produced in the same manner as the aforementioned aliphatic polycarbonate resin **A.**

The pressure sensitive adhesive in the first embodiment contains 50 mass% or more of the aliphatic polycarbonate resin A0 and may preferably contain 60 mass% or more, particularly preferably 70 mass% or more, and further preferably 80 mass% or more of the aliphatic polycarbonate resin A0. The upper limit of the content is not particularly limited and may be 100 mass%.

The pressure sensitive adhesive in the first embodiment may contain other components than the aliphatic polycarbonate resin A0. Examples of such components include various additives known in the pressure sensitive adhesive field, such as tackifiers, UV absorbers, dyes, pigments, antioxidants, deterioration inhibitors, antistatics, flame retardants, light stabilizers, softeners, silane coupling agents, and fillers.

(2) Pressure Sensitive Adhesive in Second Embodiment

The pressure sensitive adhesive constituting the pressure sensitive adhesive layer in the pressure sensitive adhesive sheet according to the second embodiment contains 50 mass% or more of the crosslinked aliphatic polycarbonate resin B0, which is a crosslinked product of the aliphatic polycarbonate resin A0 having an ether structure in its main chain and a crosslinkable functional group in its side chain. The crosslinked aliphatic polycarbonate resin B0 may be preferably a crosslinked product of the aliphatic polycarbonate resin A having the aforementioned structure SA (crosslinked aliphatic polycarbonate resin B), and may be particularly preferably a self-crosslinked product of the aliphatic polycarbonate resin A having the aforementioned structure SA.

The crosslinked aliphatic polycarbonate resin B, which is a crosslinked product of the aliphatic polycarbonate resin A having the structure SA, maintains a low glass-transition temperature (Tg) like the aliphatic polycarbonate resin A having the structure SA and develops flexibility and tackiness, while its crosslinked structure increases the cohesive strength, resulting in more excellent adhesive strength and holding power.

The crosslinked aliphatic polycarbonate resin B0 may be a crosslinked product obtained by crosslinking the aliphatic polycarbonate resin A0 using a desired crosslinker, but may be preferably a crosslinked product obtained by self-crosslinking the aliphatic polycarbonate resin A0, and may be particularly preferably a crosslinked product obtained by self-crosslinking the aliphatic polycarbonate resin A having the structure SA. Specifically, the crosslinked aliphatic polycarbonate resin B0 may be preferably obtained through reacting the crosslinkable functional groups (crosslinkable functional groups possessed by R3 and R4 in Formula (Ic) and Formula (Id)) possessed by the side chains of the aliphatic polycarbonate resin A with each other and crosslinking a plurality of aliphatic polycarbonate resins A via the crosslinkable functional groups.

The crosslinked aliphatic polycarbonate resin B0 can be preferably produced by irradiating the aliphatic polycarbonate resin A0 with energy rays. Specifically, the crosslinked aliphatic polycarbonate resin B0 can be produced in the same manner as the aforementioned crosslinked aliphatic polycarbonate resin **B.**

The pressure sensitive adhesive in the second embodiment contains 50 mass% or more of the aliphatic polycarbonate resin B and may preferably contain 60 mass% or more, particularly preferably 70 mass% or more, and further preferably 80 mass% or more of the aliphatic polycarbonate resin **B.** The upper limit of the content is not particularly limited and may be 100 mass%.
The pressure sensitive adhesive in the second embodiment may contain other components than the aliphatic polycarbonate resin **B.** Examples of such components include, in addition to photopolymerization initiators or their decomposition products, various additives known in the pressure sensitive adhesive field, such as tackifiers, UV absorbers, dyes, pigments, antioxidants, deterioration inhibitors, antistatics, flame retardants, light stabilizers, softeners, silane coupling agents, and fillers.

**2.** Pressure Sensitive Adhesive Layer

From the viewpoint of adhesive strength and holding power, the thickness of the pressure sensitive adhesive layer in the pressure sensitive adhesive sheets according to the first and second embodiments (measured in accordance with JIS K7130) may be preferably 1 μm or more, more preferably 5 μm or more, particularly preferably 10 μm or more, and further preferably 20 μm or more as the lower limit.
Additionally or alternatively, from the viewpoints of coating properties, handling properties, etc., the thickness of the above pressure sensitive adhesive layer may be preferably 80 μm or less, more preferably 50 μm or less, particularly preferably 40 μm or less, and further preferably 30 μm or less as the upper limit.

3. Configuration Examples

Specific configurations as examples of the pressure sensitive adhesive sheets according to the first and second embodiments are illustrated in FIG. 1 and FIG. 2.
As illustrated in FIG. 1, a pressure sensitive adhesive sheet 1A according to an embodiment is composed of, from the bottom, a release sheet 12, a pressure sensitive adhesive layer 11 laminated on the release surface of the release sheet 12, and a base material 13 laminated on the pressure sensitive adhesive layer 11.
As illustrated in FIG. 2, a pressure sensitive adhesive sheet 1B according to another embodiment is composed of two release sheets 12a and 12b and a pressure sensitive adhesive layer 11 interposed between the two release sheets 12a and 12b so as to be in contact with release surfaces of the two release sheets 12a and 12b. As used in the present specification, the release surface of a release sheet refers to a surface having releasability in the release sheet, and examples of the release surface include both a surface subjected to release treatment and a surface that exhibits releasability even without being subjected to release treatment.

3-1. Each element

(1) Pressure Sensitive Adhesive Layer

The pressure sensitive adhesive layer 11 in the present embodiments is as described previously and may be composed of a pressure sensitive adhesive containing 50 mass% or more of the aliphatic polycarbonate resin A or a pressure sensitive adhesive containing 50 mass% or more of the crosslinked aliphatic polycarbonate resin **B.**

(2) Release Sheet

The release sheet 12, 12a, 12b is to protect the pressure sensitive adhesive layer 11 until the use of the pressure sensitive adhesive sheet 1 and is removed when using the pressure sensitive adhesive sheet 1A, 1B (pressure sensitive adhesive layer 11). In the pressure sensitive adhesive sheet 1A, 1B according to the present embodiments, the release sheet 12 or one or both of the release sheets 12a and 12b may not necessarily be required.
Examples of the release sheet 12, 12a, 12b for use include plastic films such as a polyethylene film, a polypropylene film, a polybutene film, a polybutadiene film, a polymethylpentene film, a polyvinyl chloride film, a vinyl chloride copolymer film, a polyethylene terephthalate film, a polyethylene naphthalate film, a polybutylene terephthalate film, a polyurethane film, an ethylene vinyl acetate film, an ionomer resin film, an ethylene-(meth)acrylic acid copolymer film, an ethylene-(meth)acrylic ester copolymer film, a polystyrene film, a polycarbonate film, a polyimide film, and a fluorine resin film, crosslinked films thereof, etc., and paper such as high-quality paper, glassine paper, craft paper, or clay-coated paper. Laminates each obtained by laminating a plurality of such films may also be used.
It may be preferred to perform release treatment for the release surface (in particular, a surface to be in contact with the pressure sensitive adhesive layer 11) of the release sheet 12, 12a, 12b. Examples of a release agent to be used for the release treatment include alkyd-based, silicone-based, fluorine-based, unsaturated polyester-based, polyolefin-based, and wax-based release agents. One of the release sheets 12a and 12b may be a tight release sheet that requires higher peeling force while the other may be an easy release sheet that requires lower peeling force.

The thickness of the release sheet 12, 12a, 12b is not particularly limited, but may be usually about 20 to 150 μm.

(3) Base Material

The base material 13 is not particularly limited, and any base material used as a base material sheet for an ordinary adhesive sheet can be used. Examples of the materials include, in addition to the desired optical members, woven or nonwoven fabrics using fibers such as polyester, acrylic, and rayon; synthetic paper; papers such as high-quality paper, glassine paper, impregnated paper, and coated paper; metal foils such as aluminum foil and copper foil; foams such as urethane foam and polyethylene foam; polyester films such as those of polyethylene terephthalate, polybutylene terephthalate, polyethylene naphthalate, polybutylene succinate, and polybutylene adipate terephthalate (compound), polyurethane films, polyethylene films, polypropylene films, cellulose films such as those of triacetyl cellulose, polyvinyl chloride films, polyvinylidene chloride films, polyvinyl alcohol films, ethylene-vinyl acetate copolymer films, polystyrene films, polycarbonate films, acrylic resin films, norbornene-based resin films, cycloolefin resin films, and other plastic films; and laminates of two or more types of these films. The plastic films may be uniaxially or biaxially stretched.

The thickness of the base material 13 varies depending on the type, but may be usually 10 to 150 μm, preferably 20 to 100 μm, and particularly preferably 25 to 75 μm.

3-2. Production Method

To produce the pressure sensitive adhesive sheet 1A according to the first embodiment, it may be preferred to coat the release surface of the release sheet 12 with a solution (coating solution) of a pressure sensitive adhesive containing the aliphatic polycarbonate resin A, perform a heat treatment to form the pressure sensitive adhesive layer 11, and then laminate the base material 13 on the pressure sensitive adhesive layer 11.

To produce the pressure sensitive adhesive sheet 1B according to the first embodiment, it may be preferred to coat the release surface of one release sheet 12a (or 12b) with a solution (coating solution) of a pressure sensitive adhesive containing the aliphatic polycarbonate resin A, perform a heat treatment to form the pressure sensitive adhesive layer 11, and then overlap the pressure sensitive adhesive layer 11 with the release surface of the other release sheet 12b (or 12a).

On the other hand, to produce the pressure sensitive adhesive sheet 1A according to the second embodiment, it may be preferred to coat the release surface of the release sheet 12 with a solution (coating solution) of a pressure sensitive adhesive containing the aliphatic polycarbonate resin A, perform a heat treatment, then laminate the base material 13 on the coating layer, and finally irradiate the coating layer with energy rays to crosslink the coating layer to form the pressure sensitive adhesive layer 11. The irradiation with energy rays can be performed, for example, through the release sheet 12.

To produce the pressure sensitive adhesive sheet 1B according to the second embodiment, it may be preferred to coat the release surface of one release sheet 12a (or 12b) with a solution (coating solution) of a pressure sensitive adhesive containing the aliphatic polycarbonate resin A, perform a heat treatment, then overlap the coating layer with the release surface of the other release sheet 12b (or 12a), and finally irradiate the coating layer with energy rays to crosslink the coating layer to form the pressure sensitive adhesive layer 11. The irradiation with energy rays can be performed, for example, through a desired release sheet (12a or 12b).

Examples of the diluent solvent used for diluting the above pressure sensitive adhesive to prepare a coating solution include aliphatic hydrocarbons such as hexane, heptane and cyclohexane, aromatic hydrocarbons such as toluene and xylene, halogenated hydrocarbons such as methylene chloride and ethylene chloride, alcohols such as methanol, ethanol, propanol, butanol and 1-methoxy-2-propanol, ketones such as acetone, methyl ethyl ketone, 2-pentanone, isophorone and cyclohexanone, esters such as ethyl acetate and butyl acetate, and cellosolve-based solvents such as ethyl cellosolve.

The concentration/viscosity of the coating solution thus prepared is not particularly limited and can be appropriately selected depending on the situation, provided that the concentration/viscosity is within any range in which the coating is possible. For example, the pressure sensitive adhesive may be diluted to a concentration of 10 to 40 mass%. When obtaining the coating solution, the addition of a diluent solvent or the like is not a necessary condition, and the diluent solvent may not be added if the pressure sensitive adhesive has a viscosity or the like that enables the coating. In this case, the pressure sensitive adhesive itself may be the coating solution

Examples of usable methods for coating with the above coating solution include a bar coating method, a knife coating method, a comma coating method, a roll coating method, a blade coating method, a die coating method, and a gravure coating method.

The coating film of the above coating solution may be subjected a heat treatment thereby to volatilize the diluent

solvent and form a pressure sensitive adhesive layer (or coating layer). The heating conditions may be, for example, preferably 30°C to 120°C for 1 to 10 minutes and particularly preferably 100°C to 120°C for 1 to 5 minutes.

4. Uses of Pressure Sensitive Adhesive Sheet

The pressure sensitive adhesive sheets according to the first and second embodiments can be used, for example, for attaching labels to various containers, daily necessities, electrical/electronic devices, various machines, medical instruments, and the like and for bonding members together, etc.

The material of the adherend is not particularly limited, and may be, for example, any of metals such as stainless steel, aluminum, and copper; glass; high-polarity materials such as polycarbonate resin, acrylic resin, polyethylene terephthalate resin, and other similar resins; and low-polarity materials such as polyethylene, polypropylene, and other polyolefin resins, polyacetal, and polytetrafluoroethylene.

The aforementioned embodiments are described to facilitate understanding of the present invention and are not described to limit the present invention. It is therefore intended that the elements disclosed in the above embodiments include all design changes and equivalents to fall within the technical scope of the present invention.

For example, the release sheet 12 of the pressure sensitive adhesive sheet 1A may be omitted, and either one of the release sheets 12a and 12b of the pressure sensitive adhesive sheet 1B may be omitted.

[Examples]

Hereinafter, the present invention will be described further specifically with reference to examples, etc., but the scope of the present invention is not limited to these examples, etc.

<Example 1>

(1) Synthesis of Polymerization Catalyst

A solution prepared by dissolving 1.33 g of potassium hexacyanocobaltate (III) ($K_3[Co(CN)_6]$; available from FUJIFILM Wako Pure Chemical Corporation) in 20 mL of deionized water was dropped into a vigorously stirred 50°C zinc chloride solution (prepared by dissolving 11.42 g of $ZnCl_2$ in a mixed solution of 60 mL of deionized water and 30 mL of t-butyl alcohol) over 45 minutes. The mixture was then vigorously stirred for 60 minutes. The obtained white suspension was centrifuged at 5,000 rpm to isolate a white solid. The isolated white solid was resuspended in a solution of t-butyl alcohol and deionized water (volume ratio of t-butyl alcohol:deionized water=5:5) while vigorously stirring them for 30 minutes. After that, the amount of t-butyl alcohol was gradually increased relative to the amount of water (volume ratio of t-butyl alcohol: deionized water was changed from 6:4 to 7:3, 8:2, and 9:1), and the separation and resuspension by centrifugation were repeated several times. Finally, the white solid was resuspended in t-butyl alcohol and then separated by centrifugation. It was then dried under vacuum at 50°C until it reached a predetermined mass, thus obtaining a DMC catalyst $Zn_3(Co[CN]_6)_2$.

(2) Synthesis of Polymer

As the raw material monomers, 1,2-epoxydecane (Edec; 1,2-decylene oxide) as the epoxide E1 and 4-hydroxybutyl acrylate glycidyl ether (4HBAGE; available from Mitsubishi Chemical Corporation) as the epoxide E2 were prepared. Then, 1,2-epoxydecane and 4-hydroxybutyl acrylate glycidyl ether were mixed in a ratio of 99:1 (molar ratio) and diluted with 50 mass parts of toluene (dehydrated toluene (available from KANTO CHEMICAL CO., INC., purity confirmed by GC was 99.5% or more)) as a polymerization solvent.

Both components were added to a pressure vessel in a ratio of 1 g of the raw material monomers (total, excluding solvent) relative to 1 mg of the DMC catalyst obtained in the above (1). In addition, phenothiazine (available from Tokyo Chemical Industry Co., Ltd., purity confirmed by GC was 99.5% or more) was added as a polymerization inhibitor to a concentration of 200 ppm. Then, the mixture was stirred under an argon atmosphere.

Subsequently, the inside of the pressure vessel was purged with $CO_2$, and then $CO_2$ was introduced into the pressure vessel by a liquid pump to set the pressure inside the pressure vessel to 4 MPa. The mixture was then stirred at 60°C for 18 hours to carry out the polymerization reaction.

After the reaction was completed, toluene was added to the contents of the pressure vessel to make a solution, and the above solution was dropped into methanol, to which 1M hydrochloric acid was added, to perform reprecipitation purification. The obtained precipitate was collected using filter paper and dissolved in chloroform, and impurities were then removed using a membrane filter (available from ADVANTEC TOYO KAISHA, LTD., pore size 3.00 μm). After that, the solution was poured into a Teflon (registered trademark) petri dish and dried in a drying oven at 50°C for 20 hours to obtain a

polymer.

The structure of the obtained polymer (aliphatic polycarbonate resin) was confirmed using $^1H$-NMR (device: available from Bruker, product name "Biospin Avance 500"). The chart at that time is illustrated in FIG. 3. In the obtained aliphatic polycarbonate resin, $R^1$ and $R^2$ in the aforementioned Formula (Ia) to Formula (Id) were $-C_8H_{17}$, and $R^3$ and $R^4$ were $-C-O-(CH_2)_4-O-C(=O)-CH=CH_2$.

On the basis of the above results, the ratio of ether structural units and the ratio of carbonate units were estimated from respective integral ratios of corresponding methylene hydrogens. As a result, the ratio (content) of ether structural units in the obtained aliphatic polycarbonate resin was 1.6%, and the carbonate ratio (content) was 98.4%. The ratio of ether structural units is calculated from the following formula based on $\alpha$, $\beta$, and $\gamma$ in the chart.

$$\text{Ether structural unit ratio } [\%] = \{\gamma/(\alpha+\beta+\gamma)\}\times 100$$

(3) Production of Pressure Sensitive Adhesive Sheet

The coating liquid of a pressure sensitive adhesive was prepared through dissolving the aliphatic polycarbonate resin obtained above in ethyl acetate, compounding 1.5 mass parts (solid content equivalent; here and hereinafter) of 1-hydroxycyclohexyl phenyl ketone as a photopolymerization initiator with 100 mass parts of the aliphatic polycarbonate resin, and stirring them sufficiently.

The release surface of a release sheet (available from LINTEC Corporation, product name "SP-PET381031") obtained by release-treating one surface of a polyethylene terephthalate film with a silicone-based release agent was coated with the coating liquid of the above pressure sensitive adhesive using a coater. The coating layer was then heated at 100°C for 1 minute to form a pressure sensitive adhesive layer with a thickness of 25 μm. Subsequently, the pressure sensitive adhesive layer on the release sheet and a polyethylene terephthalate film (available from TOYOBO CO., LTD., product name "COSMOSHINE A4360," thickness: 100 μm) as a base material were bonded together, and this was used as a pressure sensitive adhesive sheet (before UV; corresponding to the pressure sensitive adhesive sheet in the first embodiment).

The thickness of the above pressure sensitive adhesive layer refers to a value measured according to JIS K7130 using a constant-pressure thickness meter (available from TECLOCK Co., Ltd., product name "PG-02").

The above pressure sensitive adhesive sheet was then irradiated with energy rays (ultraviolet rays) through the release sheet under the following conditions to crosslink the pressure sensitive adhesive layer. The crosslinked pressure sensitive adhesive layer is composed of a crosslinked aliphatic polycarbonate resin. The pressure sensitive adhesive sheet having the crosslinked pressure sensitive adhesive layer is referred to as a pressure sensitive adhesive sheet (after UV; corresponding to the pressure sensitive adhesive sheet according to the second embodiment).

{Energy Ray Irradiation Conditions}

- High pressure mercury lamp used
- Illuminance 200 $mW/cm^2$, light amount 1,800 $mJ/cm^2$
- UV illuminance/light amount meter "UVPF-A1" available from EYE GRAPHICS CO., LTD. used

<Examples 2 to 6>

The polymers and pressure sensitive adhesive sheets were produced in the same manner as in Example 1 except that the compounding ratio (molar ratio) of 1,2-epoxydecane and 4-hydroxybutyl acrylate glycidyl ether was 99.5:0.5 (Example 2), 99.7:0.3 (Example 3), 99.9:0.1 (Example 4), 99.5:0.5 (bulk polymerization without using polymerization solvent, $CO_2$ pressure: 1MPa) (Example 5), and 99.5:0.5 ($CO_2$ pressure: 1MPa) (Example 6).

The structure of the obtained polymer (aliphatic polycarbonate resin) was confirmed using $^1H$-NMR (device: available from Bruker, product name "Biospin Avance 500"). The ratio of ether structural units and carbonate ratio in the aliphatic polycarbonate resin are listed in Table 1.

<Examples 7 to 10>

As the raw material monomers, 1,2-epoxyoctane (Eoct; 1,2-octylene oxide) as the epoxide E1 and 4-hydroxybutyl acrylate glycidyl ether (4HBAGE; available from Mitsubishi Chemical Corporation) as the epoxide E2 were prepared. Then, 1,2-epoxyoctane and 4-hydroxybutyl acrylate glycidyl ether were compounded in a ratio (molar ratio) of

99.9:0.1 (Example 7), 99.7:0.3 (Example 8), 99.5:0.5 (Example 9), and 99:1 (Example 10).

The polymers and pressure sensitive adhesive sheets were produced in the same manner as in Example 1 except that the above raw material monomers were used and the bulk polymerization was performed without using a polymerization solvent. The structure of the obtained polymer (aliphatic polycarbonate resin) was confirmed using $^{1}H$-NMR (device: available from Bruker, product name "Biospin Avance 500"). The ratio of ether structural units and carbonate ratio in the aliphatic polycarbonate resin are listed in Table 1.

<Examples 11 and 12>

As the raw material monomers, 1,2-epoxyoctane (Eoct; 1,2-octylene oxide) as the epoxide E1 and allyl glycidyl ether (AGE) as the epoxide E2 were prepared. Then, 1,2-epoxyoctane and allyl glycidyl ether were compounded in a ratio (molar ratio) of 99:1 (Example 11) and 90:10 (Example 12).

The polymers and pressure sensitive adhesive sheets were produced in the same manner as in Example 1 except that the above raw material monomers were used and the bulk polymerization was performed without using a polymerization solvent. The structure of the obtained polymer (aliphatic polycarbonate resin) was confirmed using $^{1}H$-NMR (device: available from Bruker, product name "Biospin Avance 500"). The ratio of ether structural units and carbonate ratio in the aliphatic polycarbonate resin are listed in Table 1.

<Example 13>

As the raw material monomers, 1,2-epoxydecane (Edec; 1,2-decylene oxide) as the epoxide E1 and allyl glycidyl ether (AGE) as the epoxide E2 were prepared. Then, 1,2-epoxyoctane and allyl glycidyl ether were compounded in a ratio (molar ratio) of 99:10.

The polymers and pressure sensitive adhesive sheets were produced in the same manner as in Example 1 except that the above raw material monomers were used and the bulk polymerization was performed without using a polymerization solvent. The structure of the obtained polymer (aliphatic polycarbonate resin) was confirmed using $^{1}H$-NMR (device: available from Bruker, product name "Biospin Avance 500"). The ratio of ether structural units and carbonate ratio in the aliphatic polycarbonate resin are listed in Table 1.

<Comparative Example 1>

(1) Synthesis of Polymerization Catalyst

(R,R)-N,N'-bis(3,5-di-tert-butylsalicylidene)-1,2-diaminocyclohexanecobalt(II) (available from Sigma-Aldrich Japan, product name "(R,R)-salcyCoII") and pentafluorobenzoic acid (available from Tokyo Chemical Industry Co., Ltd.) were weighed out in a molar ratio of 1:1.1 and put into a flask, to which dehydrated toluene was added. The flask was then shielded from light with aluminum foil, and the reaction was carried out at room temperature for 20 hours. After the reaction was completed, the solvent was removed under reduced pressure and the reaction product was washed several times with an excess amount of hexane. The reaction product was then vacuum dried at room temperature to obtain a cobalt salen complex.

(2) Synthesis of Polymer

An epoxy monomer 1,2-epoxypropane (propylene oxide; PO) (classified as the epoxide E1 for convenience), the cobalt salen complex obtained in the above (1) as a polymerization catalyst, and bis(triphenylphosphoranylidene) ammonium chloride (PPNCl) as a cocatalyst were weighed out in a molar ratio of epoxy monomer:polymerization catalyst:cocatalyst=2000:1:1 and stirred in a pressure vessel. All of these operations were carried out with the pressure vessel replaced with an argon atmosphere. In this polymerization step, no polymerization solvent was used and bulk polymerization was carried out.

Subsequently, the inside of the pressure vessel was purged with $CO_2$, and then $CO_2$ was introduced into the pressure vessel by a liquid pump to set the pressure inside the pressure vessel to 1.5 MPa. The mixture was then stirred at 23°C for 5 hours to carry out the polymerization reaction.

After the reaction was completed, chloroform was added to the contents of the pressure vessel to prepare a chloroform solution, which was then concentrated using a rotary evaporator. The concentrated solution was dropped into methanol, to which 1M hydrochloric acid was added and which was being stirred, to precipitate a product. After that, the product was collected by vacuum filtration using a diaphragm pump. The collected product was dissolved again in chloroform, and impurities were removed using a membrane filter (available from ADVANTEC TOYO KAISHA, LTD., pore size 3.00 μm). After that, the solution was poured into a Teflon (registered trademark) petri dish and dried in a drying oven at

50°C for 20 hours to obtain a polymer. The structure of this polymer (aliphatic polycarbonate resin; side chain carbon number 1) was confirmed using $^1$H-NMR (device: available from Bruker, product name "Biospin Avance 500"). The chart obtained is illustrated in FIG. 4.

On the basis of the above results, the ratio of carbonate units and the ratio of ether structural units were estimated from respective integral ratios of corresponding methylene hydrogens. As a result, the ratio (content; mass basis) of ether structural units in the obtained aliphatic polycarbonate resin was 0.0% because no $\gamma$ peak was observed.

(3) Production of Pressure Sensitive Adhesive Sheet

Using the aliphatic polycarbonate resin obtained above, a pressure sensitive adhesive sheet was produced in the same manner as in Example 1. For the obtained pressure sensitive adhesive sheet, the adhesive strength and holding power were not able to be measured because the pressure sensitive adhesive layer had no tackiness.

<Comparative Example 2>

As the raw material monomers, 1,2-epoxypropane (propylene oxide; PO) (classified as the epoxide E1 for convenience) and 4-hydroxybutyl acrylate glycidyl ether (4HBAGE; available from Mitsubishi Chemical Corporation) as the epoxide E2 were prepared. Then, 1,2-epoxypropane and 4-hydroxybutyl acrylate glycidyl ether were compounded in a ratio (mass ratio) of 90:10.

The operation of polymer preparation was carried out in the same manner as in Example 1 except that the above raw monomers were used and bulk polymerization was performed without using a polymerization solvent. However, physical properties were not measurable due to gelification.

<Testing Example 1> {Measurement of number-average molecular weight (Mn)}

The number-average molecular weight (Mn) of the aliphatic polycarbonate resin prepared in each of Examples and Comparative Examples was measured as a standard polystyrene equivalent value under the following conditions using gel permeation chromatography (GPC) (GPC measurement). The results are listed in Table 1.

«Measurement Conditions»

- GPS measurement device: HLC-8320 available from Tosoh Corporation
- GPC columns (passing through in the following order): available from Tosoh Corporation

  TSK guard column Super H-H
  TSK gel Super HM-H
  TSK gel Super HM-H
  TSK gel Super H2000

- Solvent for measurement: tetrahydrofuran
- Measurement temperature: 40°C

<Testing Example 2> {Measurement of glass-transition temperature (Tg)}

For the aliphatic polycarbonate resin (before UV) prepared in each of Examples and Comparative Examples and the crosslinked aliphatic polycarbonate (after UV) constituting the pressure sensitive adhesive layer of the pressure sensitive adhesive sheet (after UV) produced in each of Examples, the glass-transition temperature (Tg) was obtained by performing the measurement using a differential scanning calorimeter (available from TA Instruments Japan Inc., product name "DSC Q2000"). Specifically, 4 mg of the measurement sample of polymer was taken and put into an aluminum pan, which was then sealed with a lid. The measurement was performed by heating/cooling the measurement sample at a temperature increase/decrease rate of 10°C/min in a range from -70° C to 70°C under a dry nitrogen atmosphere. A DSC curve was created using the data obtained during the 2nd heating. The glass-transition temperature (Tg) was determined as a temperature at the intersection between the straight line extending the low-temperature side baseline of the obtained DSC curve to the high-temperature side and the tangent line drawn at the point where the gradient of the curve of a stepwise change portion due to the glass transition was maximum. The results are listed in Table 1.

<Testing Example 3> {Measurement of gel fraction}

The pressure sensitive adhesive sheet (before UV) and pressure sensitive adhesive sheet (after UV) produced in each of Examples and Comparative Examples were each cut into a size of 80 mm×80 mm, the pressure sensitive adhesive layer was wrapped in a polyester mesh (mesh size of 200), the mass was weighed with a precision balance, and the mass of the pressure sensitive adhesive alone was calculated by subtracting the mass of the above mesh itself. The mass at that time is M1.

Then, the pressure sensitive adhesive wrapped in the above polyester mesh was immersed in ethyl acetate at room temperature (23°C) for 72 hours. After that, the pressure sensitive adhesive was taken out, air-dried under an environment of a temperature of 23°C and a relative humidity of 50% for 24 hours, and further dried in an oven at 80°C for 12 hours. After the drying, the mass was weighed with a precision balance, and the mass of the pressure sensitive adhesive alone was calculated by subtracting the mass of the mesh itself. The mass at that time is M2. The gel fraction (%) is represented by (M2/M1)×100. Thus, the gel fraction (%) of each of the pressure sensitive adhesives (aliphatic polycarbonate resins (before UV) and crosslinked aliphatic polycarbonate resins (after UV)) was derived. The results are listed in Table 1.

<Testing Example 4> {Measurement of 5% weight loss temperature}

For the aliphatic polycarbonate resin (before UV) prepared in each of Examples and Comparative Examples and the crosslinked aliphatic polycarbonate resin (after UV) constituting the pressure sensitive adhesive layer of the pressure sensitive adhesive sheet (after UV) produced in each of Examples, thermogravimetric measurements were performed (according to JIS K7120 "Testing Methods of Plastics by Thermogravimetry") using a differential thermal/thermogravimetry simultaneous analyzer (available from SHIMADZU CORPORATION, product name "DTG-60") by heating the sample from 40°C to 550°C at a gas inflow rate of 100 ml/min and a heating rate of 20°C/min with nitrogen as the inflow gas. On the basis of the obtained thermogravimetry curve, the temperature at which the mass was reduced by 5% relative to the mass at a temperature of 100°C (5% weight loss temperature) was obtained. The results are listed in Table 1.

<Testing Example 5> {Measurement of adhesive strength}

The pressure sensitive adhesive sheets (before UV) and pressure sensitive adhesive sheets (after UV) produced in Examples and Comparative Examples were cut into a width of 25 mm and a length of 300 mm. Under an environment of 23°C and 50% RH, the release sheet was removed from each of the above pressure sensitive adhesive sheets, and the exposed pressure sensitive adhesive layer was attached to each of the following three types of adherends. When attaching, a roller weighing 2 kg was moved back and forth once to pressure-bond the pressure sensitive adhesive sheet to the adherend. After that, the sample was left for 24 hours under an environment of 23°C and 50% RH to be used as a sample for measuring the adhesive strength.

Then, under an environment of 23°C and 50% RH, a tensile tester (available from ORIENTEC Co., LTD., product name "TENSILON") was used to measure the adhesive strength (N/25 mm) when the laminate of the base material film and pressure sensitive adhesive layer in the sample for measuring the adhesive strength was peeled off from the adherend at a peel speed of 300 mm/min and a peel angle of 180°. The measurements were conducted in accordance with JIS Z0237: 2009 except for the conditions described herein. The results are listed in Table 1. Note that in the polypropylene (PP) plate adherend for the pressure sensitive adhesive sheet of Example 1 (before UV), zipping occurred, so there was a range in the adhesive strength. Therefore, the average of the maximum and minimum values was read as the adhesive strength value.

«Base material»

- Stainless steel (SUS) plate (SUS304, #360-polishing)
- Polycarbonate (PC) plate (available from Yukou Trading Co., Ltd., product name "PC (PC-1600)," thickness: 2mm)
- Polypropylene (PP) plate (available from Yukou Trading Co., Ltd., product name "PP (PP-N-BN)," thickness: 2mm)

In the column of "Adhesive strength" in Table 1, "G," "Cf," and "Zip" have the following meanings.

G: A thin mark remained on the adherend surface.

Cf: Cohesive failure of the pressure sensitive adhesive layer was observed.

Zip: Zipping occurred.

<Testing Example 6> {Measurement of holding power}

The pressure sensitive adhesive layer of each of the pressure sensitive adhesive sheets (before UV) and pressure sensitive adhesive sheets (after UV) produced in Examples and Comparative Examples was attached to a stainless steel (SUS) plate (SUS304, #360-polishing) as an adherend. At that time, the attaching area of the pressure sensitive adhesive layer to the stainless steel plate was set to 25 mm×25 mm. The stainless steel plate to which the pressure sensitive adhesive sheet was thus attached was left untouched for 15 minutes under an environment of 23°C and 50% RH, then set in a creep tester, and left untouched in this state for another 15 minutes. Subsequently, a load of 9.8 N was applied to the pressure sensitive adhesive sheet under an environment of 40°C, the time until the pressure sensitive adhesive sheet fell off (maximum 70,000 seconds) was measured according to the holding power measurement method of JIS Z0237: 2009, and this was determined as the holding power (seconds) of the pressure sensitive adhesive layer. The results are listed in Table 1.

In the column of "Holding power" in Table 1, "N.C." and "Cf" have the following meanings.

N.C.: Even after 70,000 seconds had passed during the measurement of the holding power, not only did the pressure sensitive adhesive sheet not fall off, but also there was no shift in the position of the pressure sensitive adhesive sheet attached to the adherend.

Cf: Cohesive failure of the pressure sensitive adhesive layer was observed.

<Testing Example 7> {Calculation of $CO_2$ introduction ratio}

The $CO_2$ introduction ratio (mass%) in the aliphatic polycarbonate resin (polymer) prepared in each of Examples and Comparative Examples was calculated based on the following formulae. It can be said that the higher the value of this $CO_2$ introduction ratio, the more effectively carbon dioxide is utilized. The results are listed in Table 1.

$CO_2$ introduction ratio [mass %]=($CO_2$ amount in polymer [g]/polymer amount [g])×100

$CO_2$ amount in polymer [g]=44×(carbonate ratio [%])

Polymer amount [g]={ (unit molecular weight of carbonate sites in polymer) × (carbonate ratio [%])}+{ (unit molecular weight of ether sites in polymer) × (ether structural unit ratio [%])}

Carbonate ratio [%]=100-ether structural unit ratio [%]

[Table 1]

| | Epoxide E1 /Epoxide E2 | $CO_2$ pressure during polymerization [MPa] | Polymerization solvent (toluene) [mass parts] | Crosslinkable functional group [mol] | Side chain carbon number | Ether structural unit ratio [mol%] | Carbonate ratio [mol%] | Glass-transition temperature (Tg) [℃] Before UV | Glass-transition temperature (Tg) [℃] After UV | 5% weight loss temperature [℃] Before UV | 5% weight loss temperature [℃] After UV | Number-average molecular weight (Mn) | Adhesive strength [N/25mm] SUS Before UV | Adhesive strength [N/25mm] SUS After UV | Adhesive strength [N/25mm] PC Before UV | Adhesive strength [N/25mm] PC After UV | Adhesive strength [N/25mm] PP Before UV | Adhesive strength [N/25mm] PP After UV | Holding power [s] SUS Before UV | Holding power [s] SUS After UV | Gel fraction [%] Before UV | Gel fraction [%] After UV | $CO_2$ introduction ratio [mass%] |
|---|---|---|---|---|---|---|---|---|---|---|---|---|---|---|---|---|---|---|---|---|---|---|---|
| Example 1 | Edec/4HBAGE =99:1 | 4 | 50 | 1.0 | 8 | 1.6 | 98.4 | -27.3 | -30.8 | 262.1 | 245.8 | 132,000 | 12.2/G | 5.0/G | 14.2/Cf | 18.2/G | 8.7/Zip | 3.3 | 12781/Cf | 70000/N.C. | 6.8 | 60.5 | 21.6 |
| Example 2 | Edec/4HBAGE =99.5:0.5 | 4 | 50 | 0.5 | 8 | 1.8 | 98.2 | -32.1 | -34.2 | 235.2 | 237.8 | 119,000 | 12.5 | 9.7 | 17.6/Cf | 20.7/Cf | 8.3 | 7.5 | 2232/Cf | 70000/N.C. | 4.1 | 55.6 | 21.6 |
| Example 3 | Edec/4HBAGE =99.7:0.3 | 4 | 50 | 0.3 | 8 | 1.5 | 98.5 | -31.0 | -31.6 | 238.5 | 234.9 | 92,000 | 12.6/G | 10.5/G | 17.0/Cf | 18.5/Cf | 9.0 | 10.1 | 4213/Cf | 70000/N.C. | 4.7 | 43.4 | 21.7 |
| Example 4 | Edec/4HBAGE =99.9:0.1 | 4 | 50 | 0.1 | 8 | 1.2 | 98.8 | -30.8 | -34.8 | 240.2 | 239.6 | 117,000 | 11.5/G | 10.7/G | 17.7 Cf | 17.5/Cf | 9.3 | 9.0 | 36954/Cf | 13925/Cf | 5 | 42.8 | 21.7 |
| Example 5 | Edec/4HBAGE =99.5/0.5 | 1 | 0 | 0.5 | 8 | 44.4 | 55.6 | -41.0 | -39.9 | 315.2 | 313.4 | 15,000 | 1/Cf | 0.1/G | 3.1/Cf | 1.1/Cf | 0.1/Cf | 0.1/Cf | 8/Cf | 9801/Cf | 3.8 | 30.1 | 14.0 |
| Example 6 | Edec/4HBAGE =99.5/0.5 | 1 | 50 | 0.5 | 8 | 24.0 | 76.0 | -39.7 | -38.3 | 254.4 | 259.3 | 25,000 | 4.6/Cf | 1.2/G | 7.8/Cf | 2.1/Cf | 0.1/Cf | 0.1/Cf | 9/Cf | 35030 | 4.3 | 36.2 | 17.9 |
| Example 7 | Eoct/4HBAGE =99.9:0.1 | 4 | 0 | 0.1 | 6 | 14.0 | 86 | -27.0 | -31.0 | 239.0 | 237.9 | 31,000 | 10.0/Cf | 11.0/Cf | 11.0/Cf | 11.5/Cf | 9.0 | 8.9 | 3862/Cf | 12501/Cf | 4.4 | 32.8 | 23.1 |
| Example 8 | Eoct/4HBAGE =99.7:0.3 | 4 | 0 | 0.3 | 6 | 12.9 | 87.1 | -33.0 | -33.6 | 238.4 | 234.4 | 35,000 | 14.1/Cf | 14.7/G | 15.3/Cf | 15.0/Cf | 8.8 | 9.3 | 4632/Cf | 42010/Cf | 5.5 | 34.1 | 23.3 |
| Example 9 | Eoct/4HBAGE =99.5:0.5 | 4 | 0 | 0.5 | 6 | 12.4 | 87.6 | -33.2 | -32.8 | 234.9 | 236.0 | 28,000 | 13.5/Cf | 0.9/G | 13.7/Cf | 2.5 | 0.13/G | 0.1/G | 2922/Cf | 70000/N.C. | 5.6 | 51.1 | 23.4 |
| Example 10 | Eoct/4HBAGE =99:1 | 4 | 0 | 1.0 | 6 | 13.9 | 86.1 | -33.5 | -36.0 | 253.8 | 239.7 | 51,000 | 18.3/Cf | 0.77/G | 20.5/Cf | 0.31/G | 0.05/Cf | 0.23/G | 3122/Cf | 70000/N.C. | 3.9 | 60.1 | 23.1 |
| Example 11 | Eoct/AGE =99:1 | 4 | 0 | 1.0 | 6 | 19.6 | 80.4 | -30.1 | -33.0 | 256.2 | 248.8 | 50,000 | 12.8/Cf | 0.64/G | 10.8/Cf | 0.12 | 0.04/Cf | 0.2/G | 3001/Cf | 50042/Cf | 4.1 | 49.9 | 22.1 |
| Example 12 | Eoct/AGE =90:10 | 4 | 0 | 10 | 6 | 7.4 | 92.6 | -25.7 | -29.9 | 257.3 | 244.3 | 99,000 | 19.7/Cf | 6.6/G | 19.0/Cf | 11.6 | 11.8 | 5.6 | 2929/Cf | 70000/N.C. | 4.1 | 69.8 | 24.6 |
| Example 13 | Edec/AGE =90/10 | 4 | 0 | 10 | 8 | 5.6 | 94.4 | -35.0 | -36.0 | 270 | 243.1 | 67,000 | 18.1/Cf | 4.1/G | 18.5/Cf | 7.6/G | 13 | 1 | 395/Cf | 70000/13mm shift | 3.5 | 63.5 | 21.5 |
| Comparative Example 1 | PO | 1.5 | 0 | 0 | 1 | 0.0 | 100.0 | 16.8 | 16.7 | 230.8 | 229.9 | 49,000 | Not measurable because sample was not able to be attached to adherend | | | | | | | | 2.3 | 2.2 | 43.1 |
| Comparative Example 2 | PO/4HBAGE =90:10 | 4 | 0 | 10 | 1 | Physical properties were not measurable due to gelification | | | | | | | | | | | | | | | | | |

As found from Table 1, the aliphatic polycarbonate resins (before UV) of Examples were produced using carbon dioxide as a production raw material, had a low glass-transition temperature (Tg), and were usable as pressure sensitive

adhesives. The crosslinked aliphatic polycarbonate resins (after UV) of Examples were produced using carbon dioxide as a production raw material, had a low glass-transition temperature (Tg), and were suitable as pressure sensitive adhesives. The pressure sensitive adhesive sheets (before UV) and pressure sensitive adhesive sheets (after UV) of Examples 1 to 4, 7, 8, and 12 were produced using carbon dioxide as a production raw material, exhibited good adhesive strength to both high-polarity and low-polarity materials, and also had excellent holding power.

[Industrial Applicability]

The aliphatic polycarbonate resin and crosslinked aliphatic polycarbonate resin according to the present invention can be suitably used as pressure sensitive adhesives, etc. Moreover, the pressure sensitive adhesive sheet according to the present invention can be suitably used in both cases where the adherend is a high-polarity material and where the adherend is a low-polarity material.

[Description of Reference Numerals]

1A, 1B... Pressure sensitive adhesive sheet
11... Pressure sensitive adhesive layer
12, 12a, 12b... Release sheet
13... Base material

## Claims

**1.** An aliphatic polycarbonate resin having an ether structure in its main chain and having a structure in which a repeating unit represented by Formula (Ia) below, a repeating unit represented by Formula (Ib) below, a repeating unit represented by Formula (Ic) below, and a repeating unit represented by Formula (Id) below are randomly copolymerized.

[Chemical Formula 1]

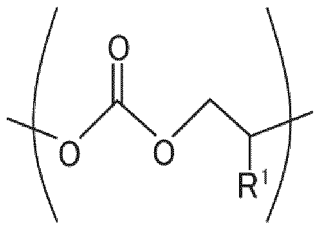

···(Ia)

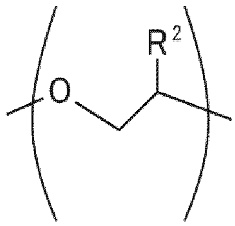

···(Ib)

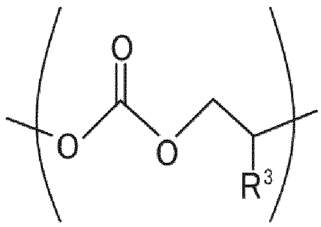

···(Ic)

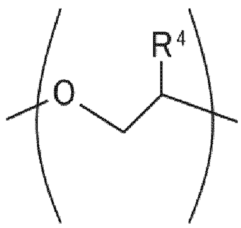

···(Id)

(In Formula (Ia) and Formula (Ib), $R^1$ and $R^2$ are each a hydrocarbon group whose carbon number is 4 or more, and may be the same or different. In Formula (Ic) and Formula (Id), $R^3$ and $R^4$ are each a hydrocarbon group having a crosslinkable functional group and may be the same or different.)

**2.** The aliphatic polycarbonate resin according to claim 1, wherein the crosslinkable functional group is a (meth)acryloyl group or an allyl group.

**3.** The aliphatic polycarbonate resin according to claim 1, wherein the $R^3$ or the $R^4$ has an alkyl chain.

**4.** The aliphatic polycarbonate resin according to claim 1, wherein the $R^3$ or the $R^4$ has an ether structure.

**5.** The aliphatic polycarbonate resin according to claim 1, wherein the $R^3$ or the $R^4$ contains a structure represented by Formula (II) below.

$$CH_2=CH-C(=O)-O-X-O- \ldots \qquad (II)$$

(In Formula (II), X is an alkyl chain.)

**6.** The aliphatic polycarbonate resin according to claim 1, wherein it contains 0.01 mol% or more and 10 mol% or less of the crosslinkable functional group.

**7.** The aliphatic polycarbonate resin according to claim 1, wherein it contains 0.1 mass% or more and 99 mass% or less of a unit of the ether structure in the main chain.

**8.** The aliphatic polycarbonate resin according to claim 1, wherein it is a polymerization reaction product of carbon dioxide and an epoxide.

**9.** The aliphatic polycarbonate resin according to claim 1, wherein its glass-transition temperature (Tg) is 5°C or lower.

**10.** A crosslinked aliphatic polycarbonate resin obtained by crosslinking the aliphatic polycarbonate resin according to any one of claims 1 to 9.

**11.** The crosslinked aliphatic polycarbonate resin according to claim 10, wherein its gel fraction is 15% or more and 85% or less.

**12.** The crosslinked aliphatic polycarbonate resin according to claim 10, wherein its 5% weight loss temperature is 200°C or higher and 450°C or lower.

**13.** A method of producing a crosslinked aliphatic polycarbonate resin, comprising irradiating the aliphatic polycarbonate resin according to any one of claims 1 to 9 with energy rays to crosslink the aliphatic polycarbonate resin.

**14.** A pressure sensitive adhesive sheet comprising a pressure sensitive adhesive layer composed of a pressure sensitive adhesive containing 50 mass% or more of an aliphatic polycarbonate resin that has an ether structure in its main chain and a crosslinkable functional group in its side chain, wherein
an adhesive strength to polypropylene is 1.5 N/25 mm or more.

**15.** A pressure sensitive adhesive sheet comprising a pressure sensitive adhesive layer composed of a pressure sensitive adhesive containing 50 mass% or more of a crosslinked aliphatic polycarbonate resin that is a crosslinked product of an aliphatic polycarbonate resin that has an ether structure in its main chain and a crosslinkable functional group in its side chain, wherein
an adhesive strength to polypropylene is 1.5 N/25 mm or more.

**16.** The pressure sensitive adhesive sheet according to claim 15, wherein its holding power according to JIS Z0237: 2009 is 8,000 seconds or more measured as a time until the pressure sensitive adhesive sheet falls off when attaching it to an adherend of stainless steel with a 25 mm×25 mm attaching area and applying a load of 9.8 N to the pressure sensitive adhesive sheet at a test temperature of 40°C.

**17.** The pressure sensitive adhesive sheet according to claim 14, wherein the aliphatic polycarbonate resin is the aliphatic polycarbonate resin according to any one of claims 1 to 9.

**18.** The pressure sensitive adhesive sheet according to claim 15, wherein the crosslinked aliphatic polycarbonate resin is the crosslinked aliphatic polycarbonate resin according to claim 10.

[FIG. 1]

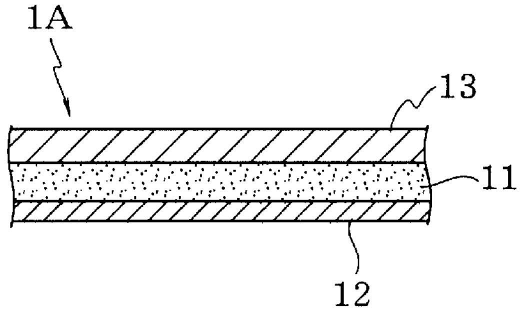


[FIG. 2]

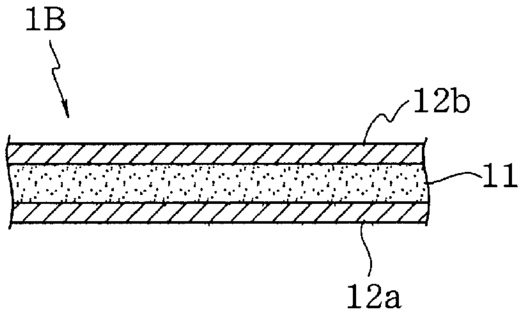


[FIG. 3]

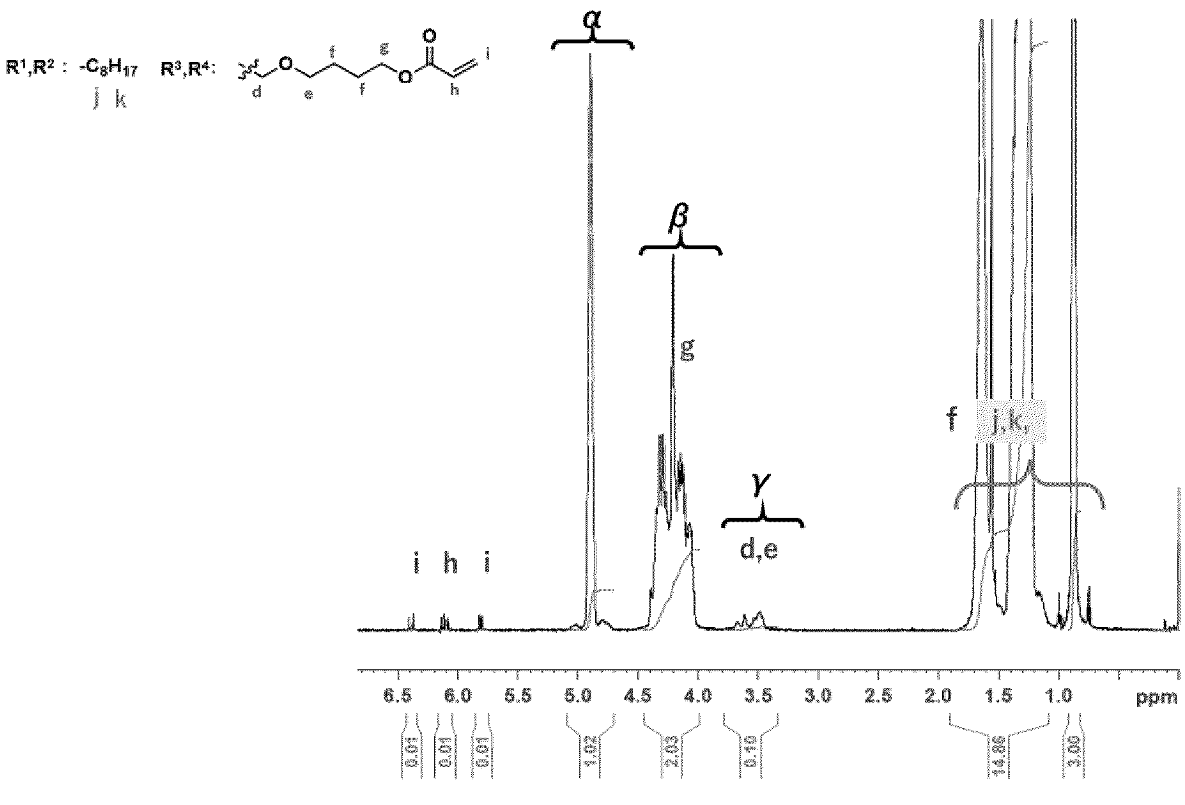

[FIG. 4]

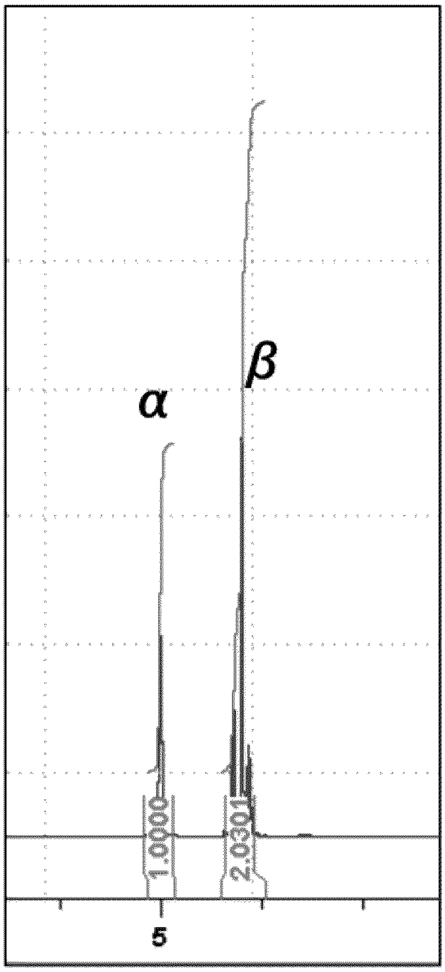

**INTERNATIONAL SEARCH REPORT**

International application No.
**PCT/JP2023/033858**

**A. CLASSIFICATION OF SUBJECT MATTER**

***C08G 64/02***(2006.01)i; ***C08F 299/02***(2006.01)i; ***C08G 64/34***(2006.01)i; ***C08J 3/24***(2006.01)i; ***C08J 3/28***(2006.01)i; ***C08J 7/04***(2020.01)i
FI: C08G64/02; C08F299/02; C08G64/34; C08J3/24 Z; C08J3/28; C08J7/04 Z CFD

According to International Patent Classification (IPC) or to both national classification and IPC

**B. FIELDS SEARCHED**

Minimum documentation searched (classification system followed by classification symbols)

C08G64/02; C08F299/02; C08G64/34; C08J3/24; C08J3/28; C08J7/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 114479045 A (BEIJING UNIVERSITY OF CHEMICAL TECHNOLOGY) 13 May 2022 (2022-05-13) claims, paragraphs [0001]-[0005], [0009], [0027]-[0031], [0050]-[0051], examples 1, 3 | 1-18 |
| A | US 2018/0334522 A1 (BOARD OF TRUSTEES OF MICHIGAN STATE UNIVERSITY) 22 November 2018 (2018-11-22) | 1-18 |
| A | JP 2019-536848 A (REPSOL, S.A.) 19 December 2019 (2019-12-19) | 1-18 |
| A | JP 2021-527739 A (HENKEL AG & CO. KGAA) 14 October 2021 (2021-10-14) | 1-18 |
| A | WO 2017/065188 A1 (LINTEC CORPORATION) 20 April 2017 (2017-04-20) | 1-18 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033858**

| Patent document cited in search report | Publication date (day/month/year) | Patent family member(s) | Publication date (day/month/year) |
|---|---|---|---|
| CN 114479045 A | 13 May 2022 | (Family: none) | |
| US 2018/0334522 A1 | 22 November 2018 | (Family: none) | |
| JP 2019-536848 A | 19 December 2019 | US 2019/0315915 A1 | |
| | | WO 2018/073313 A1 | |
| | | EP 3328915 A1 | |
| | | CA 3040327 A1 | |
| | | CN 110023374 A | |
| | | KR 10-2019-0078592 A | |
| JP 2021-527739 A | 14 October 2021 | US 2021/0122878 A1 | |
| | | WO 2019/243067 A1 | |
| | | EP 3810677 A1 | |
| | | CN 112368317 A | |
| | | KR 10-2021-0020916 A | |
| | | CA 3103743 A1 | |
| WO 2017/065188 A1 | 20 April 2017 | US 2018/0298238 A1 | |
| | | EP 3363871 A1 | |
| | | CN 108026418 A | |
| | | KR 10-2018-0066083 A | |
| | | TW 201726856 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015533920 W
- JP 2003096116 A
- WO 2011142259 A